# EUROPEAN PATENT SPECIFICATION

(11) **EP 3 148 169 B1**
(45) Date of publication and mention of the grant of the patent: **25.07.2018**
(21) Application number: 16188907.6
(22) Date of filing: 15.09.2016
(51) Int. Cl.: H04M 11/02, H04N 7/18

(54) **INTERCOM SYSTEM, INTERCOM MASTER DEVICE, AND COMMUNICATION METHOD**
GEGENSPRECHSYSTEM, GEGENSPRECHMASTERVORRICHTUNG UND KOMMUNIKATIONSVERFAHREN
SYSTÈME D'INTERPHONE, DISPOSITIF MAÎTRE D'INTERCOMMUNICATION ET PROCÉDÉ DE COMMUNICATION

(30) Priority: 28.09.2015 JP 2015190059
(43) Date of publication of application: 29.03.2017
(73) Proprietor: Panasonic Intellectual Property Management Co., Ltd., Osaka-shi, Osaka 540-6207 (JP)
(72) Inventor: HAMASAKI, Toshiyuki, Osaka, 540-6207 (JP); KOYAMA, Kazuhiro, Osaka, 540-6207 (JP); UE, Chikashi, Osaka, 540-6207 (JP); MATSUO, Kotaro, Osaka, 540-6207 (JP)
(74) Representative: Eisenführ Speiser

(56) References cited:
- WO-A1-2015/064812
- GB-A- 2 387 501
- GB-A- 2 450 332
- US-A1- 2011 025 852
- US-A1- 2013 017 812

## Description

### BACKGROUND

### 1. Technical Field

The present disclosure relates to an intercom system, an intercom master device, and a communication method.

### 2. Description of the Related Art

US 2013/0017812 A1 discloses computer-implemented methods and systems for providing remote access control to residential or office buildings. The disclosed methods allow employing virtual doorman functions in non-doonnan buildings. An example method may comprise: receiving a call signal of an intercom station, the call signal comprising a resident identifier which indicates a resident with whom a visitor is trying to communicate, receiving a video stream generated by at least one camera, the video stream comprising one or more images of the visitor, retrieving visitor data associated with the resident identifier, the visitor data comprising one or more visitor profiles, and providing access to the building for the visitor based upon one or more predetermined criteria.

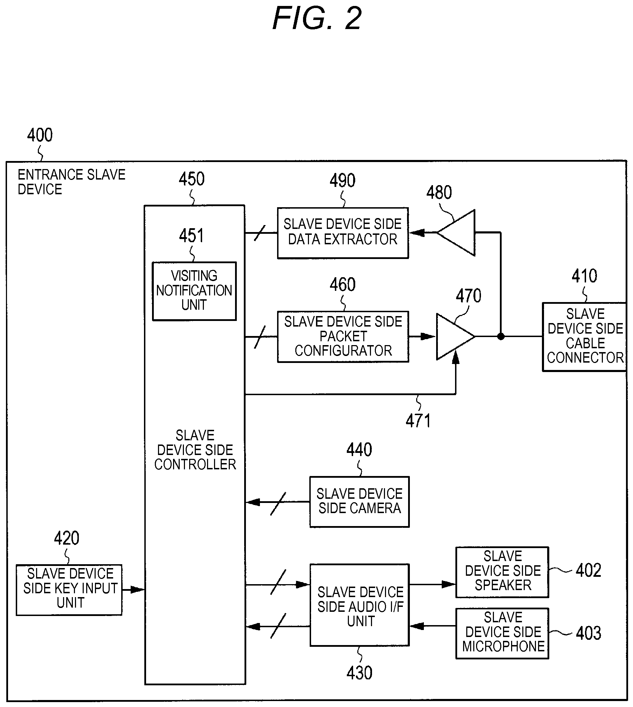

GB 2 387 501 A describes a door intercom system comprising a property communication set (pcs), door lock solenoid, door intercom and mobile phone. The pcs includes a changeover switch (fig.2) allowing users to select between "home" and "remote" modes. In "home" mode, users are able to converse with visitors at the door intercom via a speaker and microphone built into the pcs mounted in their home. When in "remote" mode, the pcs dials the telephone number of a mobile phone in response to a visitor activating the door intercom, thereby enabling the home owner to converse with the visitor remotely. The pcs is able to unlock the door to the property via a door lock solenoid and this may be controlled either via a door lock solenoid button on the pcs or, when in "remote" mode, via a key on the mobile phone's keypad, eg the "*" key. The telephone number of the mobile phone is pre-entered via a keypad and associated LCD display, both of which are built into the pcs.

US 2011/0025852 A1 describes a monitoring system of person coming to entrance comprises camera for capturing image of the person and recorder for the captured image, the system informing the person of the image recordation for deterring a crime in bad visit case or making polite notice in goodwill visit case. Unlock system has an intercom for visitor to request unlock and a self unlock operating portion for resident. If unlock done through intercom with acquaintance confirmed, polite notice is preferred, whereas "note record" is added to the image record in case of intercom unlock with unacquainted assumed. If unlock done by resident, the information and the image recordation are withheld. If entrance in a group detected, "note record" is added to the image record in case bad person successively follows goodwill person duly unlocking entrance. Privacy of acquaintance visitor image is protected by password. "Note record" is added to image record without voice message.

WO 2015/064812 A1 describes a system for remotely monitoring a door using a door phone, comprising: an electronic door lock using an RF communication scheme; a door phone device for transmitting a photographed image to a sharer and delivering a door opening/ closing signal to the electronic door lock; a wireless sharer for relaying data communications between The door phone device and a remote management server; a user's mobile terminal providing functions of displaying an image photographed by the door phone device and remotely opening/closing the door; and the remote management server for transmitting image data received from the wireless sharer to the user's mobile terminal in real time, and for transmitting a door opening control signal received from the user's mobile terminal to the wireless sharer. According to the present invention, since it is possible to transmit the image photographed by the door phone to the user's mobile terminal by simply setting a connection between the door phone and the wireless sharer without any additional expense, the present invention has an effect of remarkably reducing installation costs.

GB 2 450 332 A describes a mobile phone and transmitter/receiver security door lock system incorporates the doorbell switch which when pressed transmits a signal from the transmitter / receiver to a specific mobile phone the user of which can view who pressed the doorbell via camera lens. A two way conversation may be held using microphone and speaker. The user of the mobile phone may unlock the door by pressing a button on the phone or sound an alarm through speaker. A push button number pad or mechanical key override may also be used.

Intercom systems, in each of which identification of a visitor to an entrance or unlocking of an entrance door can be performed from an indoor intercom master device, have come into wide use in the related art. Recently, technologies that make it possible to perform visitor identification or a door unlocking operation from a communication terminal, such as a smartphone, have received attention.

In the technology (which is hereinafter referred to as the "related art") that is disclosed in Japanese Patent Unexamined Publication No. 2005-23689, when receiving a door unlocking command from a communication terminal, a service center apparatus performs authentication processing on a communication terminal, and in a case where success in the authentication takes place, provides an instruction to door-unlock an entrance door that is in advance associated with the communication terminal. In the related art, for example, it is possible that when a child goes home, his/her parent at work carries out a telephone conversation with the child and unlocks an entrance door by remote operation in order for the child to enter the house.

However, there is room for improvement in terms of security in the related art. For example, in a case where the communication terminal is acquired by a third party in a destination place, or in a case where a door unlocking command that imitates terminal information of a genuine communication terminal is transmitted from a communication terminal of a third party, there is a likelihood that an entrance door will be unlocked illegally. Furthermore, particularly, in a case where an operation is performed from the destination place using a public network, such as the Internet, there is an increased likelihood that the entrance door will be unlocked illegally.

### SUMMARY

An object of the present disclosure is to provide an intercom system, an intercom master device, and a communication method in which it is possible that an operation of unlocking an entrance door is performed from a communication terminal in a state where a higher level of security is achieved.

According to an aspect of the present disclosure, there is provided an intercom system as defined in claim 1.

According to another aspect of the present disclosure, there is provided an intercom master device as defined in claim 4.

According to still another aspect of the present disclosure, there is provided a communication method in an intercom system as defined in claim 5.

According to the present disclosure, an operation of unlocking an entrance door can be performed from a communication terminal in a state where a higher level of security is achieved.

### BRIEF DESCRIPTION OF THE DRAWINGS

FIG. 1 is a systematic constitutional diagram illustrating an example of a constitution of an intercom system according to an embodiment of the present disclosure;
FIG. 2 is a block diagram illustrating an example of a constitution of an entrance slave device according to the present embodiment;
FIG. 3 is a block diagram illustrating an example of an intercom master device according to the present embodiment;
FIG. 4 is a block diagram illustrating an example of a wireless terminal according to the present embodiment;
FIG. 5 is a flowchart illustrating an example of operation of the intercom master device according to the present embodiment;
FIG. 6 is a sequence diagram illustrating an example of operation of an intercom system in a case where a visitor is at an entrance, according to the present embodiment;
FIG. 7 is a plan diagram illustrating an example of a display state of the wireless terminal when a terminal-destined visiting notification is received, according to the present embodiment;
FIG. 8 is a plan diagram illustrating an example of the display state of the wireless terminal when a telephone conversation is carried out, according to the present embodiment;
FIG. 9 is a plan diagram illustrating an example of the display state of the wireless terminal when an unlocking instruction operation is performed, according to the present embodiment;
FIG. 10 is a plan diagram illustrating an example of the display state of the wireless terminal when an unlocking operation succeeds, according to the present embodiment;
FIG. 11 is a sequence diagram illustrating an example of the operation of the intercom system in a case where a visitor is not at the entrance, according to the present embodiment;
FIG. 12 is a plan diagram illustrating an example of the display state of the wireless terminal when the unlocking operation fails, according to the present embodiment;
FIG. 13 is a sequence diagram illustrating an example of the operation of the intercom system in a case where the wireless terminal is located indoors, according to another embodiment;
FIG. 14 is a sequence diagram illustrating an example of the operation of the intercom system in a case where the wireless terminal is located outdoors, according to another embodiment;
FIG. 15 is a sequence diagram illustrating an example of the operation of the intercom system in a case where the unlocking operation is performed while the telephone conversation is carried out, according to still another embodiment; and
FIG. 16 is a sequence diagram illustrating an example of the operation of the intercom system in a case where the unlocking operation is performed while the telephone conversation is not carried out, according to still another embodiment.

### DETAILED DESCRIPTION

An embodiment of the present disclosure will be described in detail blow referring to the drawings.

### System Overview

First, an overview of an intercom system according to the embodiment the present disclosure is described.

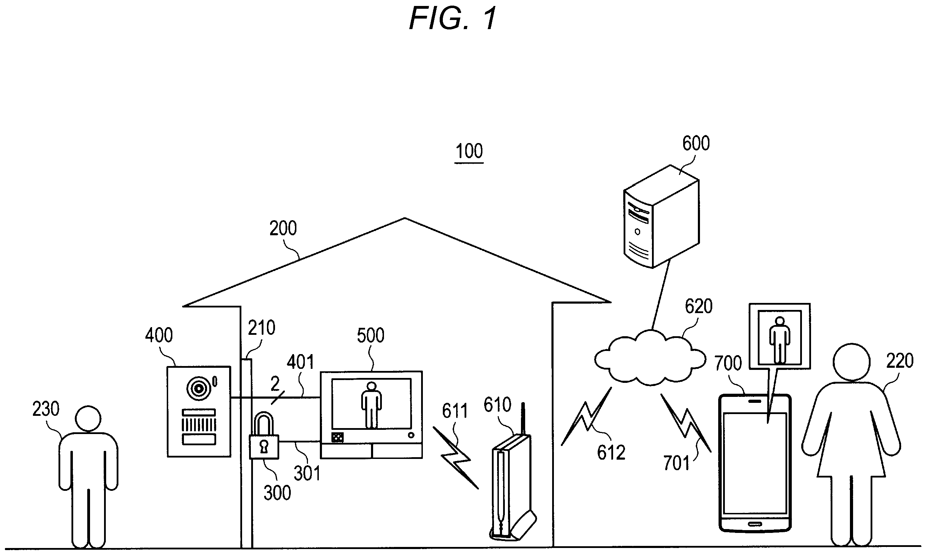

FIG. 1 is an example of a constitution of the intercom system according to the present embodiment. At this point, a surrounding environment of the constitution of the system is illustrated together as well.

As is illustrated in FIG. 1, intercom system 100, for example, has electronic lock 300 that is provided in entrance door 210 of building 200 that is a house of user 220, and entrance slave device 400 that is installed in the vicinity of entrance door 210, and intercom master device 500 that is installed inside of building 200.

Electronic lock 300 is a locking device that performs unlocking/locking of entrance door 210, in response to an unlocking request/locking request that is an electric signal, in addition to performing a normal key operation on a keyhole. Electronic lock cord 301 that is a JEM-A standard cord is laid between electronic lock 300 and intercom master device 500. It is possible that under the control of intercom master device 500, electronic lock 300 performs the unlocking/locking.

Entrance slave device 400 includes a call button, a speaker, a microphone, and a digital camera. Two-line cable 401 that is made from a pair of copper wires is laid between entrance slave device 400 and intercom master device 500. Entrance slave device 400 has a function of capturing an image of the vicinity of an entrance and transmitting the captured image to intercom master device 500, in addition to a function of making a call and carrying out a telephone conversation. Two-line cable 401, for example, is a communication cable that has been installed in the past in building 200 and is used for an old-type intercom system which does not perform transfer of an image signal.

Intercom master device 500 includes a speaker, a liquid crystal display, a monitor button, a telephone conservation button, a microphone, and locking and unlocking buttons. In addition to a function of answering a call (starting to carry out a telephone conversation), intercom master device 500 has a function of displaying the image of the vicinity of the entrance that is sent from entrance slave device 400 and a function of performing an operation of unlocking/locking enabling electronic 300 of entrance door 210 on intercom master device 500 itself.

Furthermore, intercom system 100 has wireless communication router 610 that is installed inside of building 200, authentication server 600 that is connected to public network 620, such as the Internet, and wireless terminal (a communication terminal) 700, such as a smartphone, that is possible to carry outside of building 200.

Wireless communication router 610 connects to each of intercom master device 500 and public network 620 through wireless communication lines 611 and 612, and performs relay of communication between intercom master device 500 and public network 620. Wireless communication line 611, for example, is a Wi-Fi (a registered trademark) line, and wireless communication line 612, for example, is a Long Term Evolution (LTE) line.

Authentication server 600 connects to public network 620 through wireless communication router 610, and performs communication with wireless communication router 610 through intercom master device 500. Furthermore, authentication server 600 performs authentication processing on a wireless terminal (for example, wireless terminal 700) that has access to intercom master device 500, and, in a case where succession in authentication takes place, performs relay of communication between the wireless terminal and intercom master device 500.

Wireless terminal 700 makes a connection to public network 620 through wireless communication line 701, and has access to intercom master device 500 through authentication server 600. Wireless communication line 701, for example, is the LTE line. It is possible that wireless terminal 700 makes a connection to intercom master device 500 through public network 620, authentication server 600, and wireless communication router 610, from inside and outside building 200.

Furthermore, wireless terminal 700 includes a speaker, a touch panel-attached liquid crystal display, a microphone, a terminal monitor button, a terminal telephone conversation button, a terminal unlocking button, and a terminal locking button. These buttons, for example, are image buttons that are displayed on the touch panel-attached liquid crystal display.

Intercom master device 500 described above performs transferring of an image, audio, and various pieces of control information between entrance slave device 400 and wireless terminal 700, receives a terminal's unlocking instruction from wireless terminal 700, and thus unlocks electronic lock 300. That is, intercom master device 500 described above has a function of making the answering of a call (starting to carry out a telephone conversation), the displaying of the image of the vicinity of an entrance, and the unlocking/locking operation by electronic lock 300 possible in wireless terminal 700, as well.

Entrance slave device 400 and intercom master device 500, for example, packetize various pieces of data that are target for transmission to the other party, and then perform coding on a result of the marketization, based on a technology that is disclosed in Japanese Patent Unexamined Publication No. 2005-23689, and, transmits a result of the coding to the other party using packet transfer. At this time, entrance slave device 400 and intercom master device 500 each perform transfer in a baseband, using time division duplex (time division bidirectional transfer). That is, entrance slave device 400 and intercom master device 500 alternately switch between transmission and reception with the passage of time, and perform the transmission during an interval during which the other party does not perform the transmission.

Accordingly, intercom system 100 can realize transmission of a high-quality image audio signal from entrance slave device 400 to intercom master device 500, utilizing existing two-line cable 401 effectively. However, a scheme for communication between entrance slave device 400 and intercom master device 500 is not limited to the example, and various communication schemes that are well known can be employed as such a scheme.

It is possible that while user 220 is not only inside of building 200 but also outside of building 200, when visitor 230 is at the entrance, intercom system 100 notifies user 220 of the fact that visitor 230 is at the entrance. In intercom system 100, user 220 has a conversation with visitor 230 while checking an intercom image, and in a case where visitor 230 is identified as a user 220's child and so forth, it is possible that an operation of unlocking entrance door 210 is performed remotely.

However, in a case where the wireless terminal 700 provides an instruction for unlocking, through public network 620, as described above, there is room for improvement in terms of security. Accordingly, intercom master device 500 limits the unlocking of electronic lock 300 according to the terminal's unlocking instruction to a case where visitor 230 is at entrance door 210, and thus prevents unnecessary unlocking due to a remote operation. As a result, an improvement in security is achieved.

The frequency with which persons visit building 200 during absence from home is not higher than usual. For this reason, although the terminal's unlocking instruction is transmitted based on an operation by an unauthorized person, there is a low likelihood that a timing of that instruction will be consistent with a timing at which a person makes a visit. Therefore, intercom system 100 can realize an unlocking operation from wireless terminal 700, in a state where a likelihood is reduced that entrance door 210 will be unlocked by the unauthorized person at a timing at which the unlocking is set not to be performed.

### Constitution of Each Device

At this point, a constitution of a main device of intercom system 100 is described. Each device that constitutes intercom system 100, for example, has a Central Processing Unit (CPU), a storage medium, such as a Read Only Memory (ROM) in which a control program is stored, a memory for operation, such as a Random Access Memory (RAM), and a communication circuit, which are not illustrated. In this case, a function of each unit that will be described below is realized by the CPU executing the control program.

### Constitution of the Electronic Lock

A constitution of a well-known electronic lock can be employed as a constitution of electronic lock 300. For example, electronic lock 300 is configured to include a JEM-A adapter that includes a JEM-A standard HA terminal-A to which one end of electronic lock cord 301 is connected and to switch between unlocked and locked states according to an input signal to a terminal.

With this configuration, under the control of intercom master device 500, electronic lock 300 can perform the unlocking/locking of entrance door 210.

### Constitution of the Entrance Slave Device

FIG. 2 is a block diagram illustrating an example of a constitution of entrance slave device 400.

In FIG. 2, entrance slave device 400 has slave device side cable connector 410, slave device side key input unit 420, slave device side speaker 402, slave device side microphone 403, slave device side audio interface (I/F) 430, and slave device side camera 440. Furthermore, entrance slave device 400 has slave device side controller 450, slave device side packet configurator 460, slave device side transmission driver 470, slave device side reception driver 480, and slave device side data extractor 490.

Slave device side cable connector 410, for example, includes a connection terminal for the two-line cable, and connects between the entrance side end of two-line cable 401, and slave device side transmission driver 470 and slave device side reception driver 480, in a state where a signal is transferable.

Slave device side key input unit 420 includes the call button described above, and when the call button is operated, a signal indicating that the call button is operated is output to slave device side controller 450.

Slave device side speaker 402 converts an analog audio data that is output from slave device side audio I/F unit 430, into audio and outputs a result of the conversion.

Slave device side microphone 403 collects ambient audio, converts the ambient audio into analog audio data, and outputs a result of the conversion to slave device side audio I/F unit 430.

Slave device side audio I/F unit 430 converts digital audio data that is output from slave device side controller 450, into analog audio data, performs adjustment of a signal level of the analog audio data, and outputs the signal level-adjusted analog audio data to slave device side speaker 402. Furthermore, slave device side audio I/F unit 430 adjusts a signal level of analog audio data that is output from slave device side microphone 403, converts the signal level-adjusted analog audio data into digital audio data, and outputs a result of the conversion to slave device side controller 450. The analog conversion and the digital conversion are performed by A/D and D/A converters (not illustrated), respectively.

Slave device side audio I/F unit 430 performs prescribed audio compression processing on data that results from performing the digital conversion on analog audio data which is output from slave device side microphone 403, and may output data that is obtained by performing the prescribed audio compression processing, as digital audio data, to slave device side controller 450. Furthermore, in a case where the digital audio data that is output from slave device side controller 450 is data that is obtained by performing the prescribed audio compression processing, slave device side audio I/F unit 430 performs prescribed audio decompression processing on the data, and then performs the digital/analog conversion.

Slave device side camera 440 includes the digital camera described above, captures an image of the entrance, generates digital image data, and outputs the generated digital image data to slave device side controller 450. Slave device side camera 440 may be equipped with an encoder module. That is, slave device side camera 440 may output data that is obtained by performing prescribed moving-image compression processing, such as H.264, on the image data that is output from the digital camera, as digital image data, the slave device side controller 450.

When visitor 230 is at entrance door 210, visiting notification unit 451 of slave device side controller 450 transmits a visiting notification indicating that visitor 230 is at entrance door 210, to intercom master device 500. For example, when a signal indicating the call button is operated is output from slave device side key input unit 420, visiting notification unit 451 transmits the visiting notification to intercom master device 500.

Visiting notification unit 451 may determine the presence or absence of visitor 230 at entrance door 210 based on an output signal of a human motion sensor that is installed in the vicinity of entrance door 210 or on human motion detection processing and the like on an image obtained by slave device side camera 440.

Furthermore, when visitor 230 is at entrance door 210 or when an audio image transmission instruction is received from intercom master device 500, slave device side controller 450 starts prescribed control processing for monitoring the vicinity of the entrance and realizing an image-accompanied telephone conversation. The control processing is performed by transmitting to intercom master device 500 the digital audio data and the digital image data that are output from slave device side audio I/F unit 430 and slave device side camera 440. Furthermore, the control processing is performed by outputting to slave device side audio I/F unit 430 the digital audio data that is received from intercom master device 500.

When transmitting the visiting notification or when receiving the audio image transmission instruction, slave device side controller 450 performs control in such a manner that slave device side speaker 402, slave device side microphone 403, slave device side audio I/F unit 430, and slave device side camera 440 start to operate.

Furthermore, slave device side controller 450 may transmit various pieces of control data relating to operation of entrance slave device 400 or operation of intercom master device 500, to intercom master device 500. The control data, for example, includes sensing information of a temperature sensor that is included in various sensor devices (not illustrated), such as entrance slave device 400, an illuminance sensor, and a human motion sensor.

Slave device side packet configurator 460 suitably divides and packetizes the digital audio data and the digital image data (and the control data) that are output from slave device side controller 450, codes generated packet data, and generates an uplink signal that is destined for intercom master device 500. Slave device side packet configurator 460 outputs the generated uplink signal to slave device side transmission driver 470.

Slave device side transmission driver 470 buffers the uplink signal that is output from slave device side packet configurator 460, performs adjustment of a signal level of the buffered uplink signal, and transmits the signal level-adjusted signal to intercom master device 500 through slave device side cable connector 410.

Slave device side reception driver 480 buffers a downlink signal that is sent from intercom master device 500 through slave device side cable connector 410, by performing adjustment of a signal level of the downlink signal, and outputs the signal level-adjusted downlink signal to slave device side data extractor 490.

Slave device side data extractor 490 extracts the digital audio data of intercom master machine 500, which is included in the downlink signal, from the downlink signal that is output from slave device side reception driver 480, and outputs the extracted digital audio data to slave device side controller 450.

Transmission and reception of various pieces of information between entrance slave device 400 itself and intercom master device 500 by slave device side controller 450 described above are performed through slave device side packet configurator 460, slave device side transmission driver 470, slave device side cable connector 410, slave device side reception driver 480, and slave device side data extractor 490.

However, based on transmission control information that is shared (retained) in advance between entrance slave device 400 itself and intercom master device 500, slave device side controller 450 controls operation of each of slave device side transmission driver 470 and slave device side reception driver 480 in such a manner that the transmission of the uplink signal and the reception of the downlink signal are performed in a time-division manner. The transmission control information is information that stipulates transmission timing and reception timing for each of entrance slave device 400 and intercom master device 500, in time division duplex between entrance slave device 400 and intercom master device 500. According to the transmission control information, control of operation of slave device side transmission driver 470, for example, is performed by outputting enable signal 471 or the like that controls operation (drive of a signal) of slave device side transmission driver 470.

Furthermore, delivery of data between the units described above by entrance slave device 400 is performed with digital transfer, except between slave device side speaker 402 and slave device side microphone 403, and slave device side audio I/F unit 430.

With this configuration, when visitor 230 is at entrance door 210, entrance slave device 400 can transmit the visiting notification to intercom master device 500.

### Constitution of the Intercom Master Device

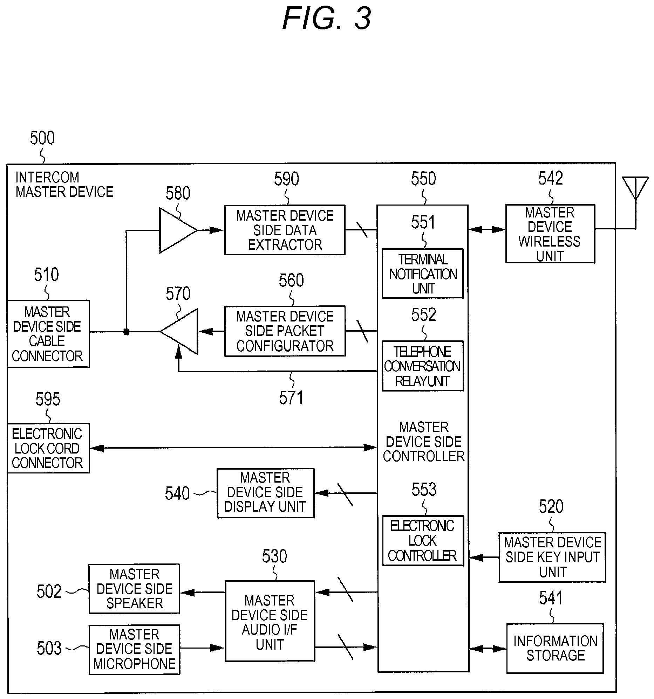

FIG. 3 is a block diagram illustrating an example of a constitution of intercom master device 500.

In FIG. 3, intercom master device 500 has master device side cable connector 510, master device side key input unit 520, master device side speaker 502, master device side microphone 503, master device side audio I/F unit 530, and master device side display unit 540. Furthermore, intercom master device 500 has information storage 541, master device wireless unit 542, master device side controller 550, master device side packet configurator 560, master device side transmission driver 570, master device side reception driver 580, master device side extractor 590, and electronic lock cord connector 595.

Master device side cable connector 510 includes a connection terminal for the two-line cable, and connects between one indoors-side end of two-line cable 401, and master device side transmission driver 570 and master device side reception driver 580, in a state where a signal is transferable.

Master device side key input unit 520 includes the monitor button and the telephone conversation button, which are described above, and when one of these buttons is operated, outputs a signal indicating that the button is operated, to master device side controller 550.

Master device side speaker 502 converts analog audio data that is output from master device side audio I/F unit 530 into audio, and outputs the resulting audio.

Master device side microphone 503 collects ambient audio, converts the ambient audio into analog audio data, and outputs a result of the conversion to master device side audio I/F unit 530.

Master device side audio I/F unit 530 converts digital audio data that is output from master device side controller 550, into analog audio data, performs adjustment of a signal level of the analog audio data, and outputs the signal level-adjusted analog audio data to master device side speaker 502. Furthermore, master device side audio I/F unit 530 adjusts a signal level of analog audio data that is output from master device side microphone 503, converts the signal level-adjusted analog audio data into digital audio data, and outputs a result of the conversion to master device side controller 550. The analog conversion and the digital conversion are performed by A/D and D/A converters (not illustrated), respectively.

Master device side audio I/F unit 530 may output data that is obtained by performing prescribed audio compression processing on data that results from performing the digital conversion on analog audio data which is output from master device side microphone 503, as digital audio data, to master device side controller 550. Furthermore, in a case where the digital audio data that is output from master device side controller 550 is data that is obtained by performing the prescribed audio compression processing, master device side audio I/F unit 530 may perform prescribed audio decompression processing on the data, and then perform the digital/analog conversion.

Master device side display unit 540 includes the liquid crystal display described above, reproduces the digital image data that is output from master device side controller 550, and displays an image of the entrance. In a case where the digital image data that is output from master device side controller 550 is data that is obtained by performing prescribed moving-image compression processing, prescribed moving-image decompression processing is performed on the data and image displaying of the resulting data is performed.

Included in information storage 541 are pieces of log-in information, such as ID information, such as Media Access Control (MAC), key information, and a password, which are exchanged in advance between intercom master device 500 itself and wireless terminal 700 that is authorized to carry out a telephone conversation between intercom master device 500 itself and entrance slave device 400 and to perform operations of unlocking and locking electronic lock 300.

Master device wireless unit 542 includes a wireless communication circuit and an antenna, and makes a connection to wireless communication router 610 through wireless communication lines 611 and 612, which are described, in a manner that makes it possible to communicate with wireless communication router 610 itself. Master device wireless unit 542 makes a connection to wireless terminal 700 through wireless communication router 610, public network 620, and authentication server 600, in a manner that makes it possible to communicate with wireless terminal 700 itself.

When receiving the visiting notification described above from entrance slave device 400, master device side controller 550 outputs prescribed call sound from master device side speaker 502. The output of the call sound, for example, is performed by the master device side controller 550 outputting a digital audio signal for the prescribed call sound to master device side audio I/F unit 530.

In addition, master device side controller 550 starts the monitoring of the vicinity of the entrance and prescribed control processing for realizing an image-accompanied telephone conversation between entrance slave device 400 and intercom master device 500. The control processing is performed by transmitting the digital audio data that is output from master device side audio I/F unit 530 to entrance slave device 400 and by outputting to slave device side audio I/F unit 430 and master device side display unit 540 the digital audio data and the digital image data that are received from entrance slave device 400. However, master device side controller 550 does not perform transmission of the digital audio data to entrance slave device 400 until a signal indicating that the telephone conservation button is operated is output from master device side key input unit 520.

When receiving the visiting notification, master device side controller 550 may perform control in such a manner that master device side speaker 502, master device side microphone 503, master device side audio I/F unit 530, and master device side display unit 540 start to operate.

Furthermore, master device side controller 550 may transmit control data relating to the operation of intercom master device 500 and the operation of entrance slave device 400 to entrance slave device 400. The control data, for example, includes control signals for controlling camera operations (operations, such as data rate setting, panning, tilting, lighting, and filtering) by entrance slave device 400 from intercom master device 500 or an operation by each of various sensor devices that are included in entrance slave device 400. Furthermore, the control data includes a control signal for controlling operation of a device (an electronic key to a door or the like) that is installed outdoors, through a wireless communication circuit and the like (which are not illustrated) which are included in entrance slave device 400.

In addition, when receiving a log-in request from wireless terminal 700 through authentication server 600, master device side controller 550 performs the authentication processing on wireless terminal 700, based on the log-in information that is stored in information storage 541. That is, master device side controller 550, for example, decodes the ID information and the password that are encrypted, which are included in the log-in request, with the key information, and collates results of the decoding with contents of the log-in information. In a case where the success in authentication takes place, telephone conversation relay unit 552 makes a connection to wireless terminal 700 through authentication server 600.

When the visiting notification described above is received from entrance slave device 400 in a state where the connection to wireless terminal 700 is made, along with the processing described above, master device side controller 550 performs transmission of a terminal-destined visiting notification to wireless terminal 700 in terminal notification unit 551. Furthermore, whenever receiving the visiting notification, terminal notification unit 551 notifies electronic lock controller 553, which will be described below, that the visiting notification is received.

When a request to start peer-to-peer communication (which is expressed below as P2P communication) is transmitted from wireless terminal 700, telephone conversation relay unit 552 of master device side controller 550 determines whether or not to accept the request. In a case where the request is accepted, telephone conversation relay unit 552 transmits a response that the request is accepted to wireless terminal 700, and starts to transfer an image that is sent from entrance slave device 400, to wireless terminal 700.

Furthermore, when receiving a telephone conversation starting instruction from wireless terminal 700, telephone conversation relay unit 552 starts telephone conversation relay processing for realizing an image-accompanied telephone conversation between entrance slave device 400 and wireless terminal 700. The telephone conversation relay processing is performed by transmitting to entrance slave device 400 the digital audio data that is received from wireless terminal 700 and by transmitting to wireless terminal 700 the digital audio data and the digital image data that are received from entrance slave device 400.

Furthermore, when receiving from wireless terminal 700 an image transmission request that requests transmission of the image of the vicinity of the entrance, telephone conversation relay unit 552 transmits the audio image transmission instruction described above to entrance slave device 400. Telephone conversation relay unit 552 transmits to wireless terminal 700 the digital image data that is received from entrance slave device 400.

When receiving the terminal's unlocking instruction from wireless terminal 700 through master device wireless unit 542, electronic lock controller 553 of master device side controller 550 transmits the unlocking request to electronic lock 300 of entrance door 210 and unlocks electronic lock 300. However, when receiving the terminal's unlocking instruction, electronic lock controller 553 unlocks electronic lock 300 under the condition that the visiting notification has been received from entrance slave device 400. Furthermore, in a case where electronic lock 300 is unlocked with the unlocking request, when a prescribed period of time, for example, 20 seconds elapses, it is desirable that electronic lock controller 553 transmits the locking request to electronic lock 300 of entrance door 210 and locks electronic lock 300.

Furthermore, when receiving a terminal's locking instruction from wireless terminal 700 through master device wireless unit 542, electronic lock controller 553 transmits the locking request to electronic lock 300 of entrance door 210 without depending on whether or not the visiting notification is received, and locks electronic lock 300.

Master device side packet configurator 560 suitably divides and packetizes the digital audio data (and the control data) that is output from master device side controller 550, codes generated packet data, and generates a downlink signal. Master device side packet configurator 560 outputs the generated downlink signal to master device side transmission driver 570.

Master device side transmission driver 570 buffers the downlink signal that is output from master device side packet configurator 560, performs gain adjustment, and transmits a result of the gain adjustment to entrance slave device 400 through master device side cable connector 510.

Master device side reception driver 580 buffers an uplink signal that is sent from entrance slave device 400 through master device side cable connector 510, by performing the gain adjustment, and outputs a result of the buffering to master device side extractor 590.

Master device side extractor 590 extracts the digital audio data and the digital image data of entrance slave device 400, which are included in the uplink signal, from the downlink signal that is output from master device side reception driver 580, and outputs to master device side controller 550 the digital audio data and the digital image data that are extracted.

Electronic lock cord connector 595, for example, includes a JEM-A adapter that includes a JEMA standard HA terminal-A, and connects between one end of electronic lock cord 301 and master device side controller 550, in a state where a signal is transferable.

Transmission and reception of various pieces of information between intercom master device 500 itself and entrance slave device 400 by master device side controller 550 described above are performed through master device side packet configurator 560, master device side transmission driver 570, master device side cable connector 510, master device side reception driver 580, and master device side data extractor 590.

However, master device side controller 550 retains the transmission of control information described above in advance, and controls operation of master device side transmission driver 570 in a time-division manner that the transmission of the downlink signal and the reception of the uplink signal are performed in a time-division manner. For example, according to the transmission control information, the control is performed by outputting enable signal 571 and the like that control the operation (the drive of the signal) of master device side transmission driver 570.

Furthermore, transmission and reception of various pieces of information between intercom master device 500 itself and wireless terminal 700 by master device side controller 550 described above are performed through master device wireless unit 542. The transmission and reception between master device 500 itself and electronic lock 300 by master device side controller 550 described above are performed through electronic lock cord connector 595.

Furthermore, delivery of data between the units described above by intercom master device 500 is performed with the digital transfer, except between master device side speaker 502 and master device side microphone 503, and master device side audio I/F unit 530.

With this configuration, when receiving the visiting notification from entrance slave device 400, intercom master device 500 can transmit the terminal-destined visiting notification to wireless terminal 700, and when receiving the terminal's unlocking instruction from wireless terminal 700, can unlock electronic lock 300 under the condition that the visiting notification has been received.

### Constitution of a Wireless Communication Router

As a constitution of wireless communication router 610, a constitution of a well-known wireless communication router that relays communication in a wireless manner can be employed.

### Constitution of an Authentication Server

As a constitution of authentication server 600, a constitution of the well-known wireless communication router that relays the communication and an authentication server can be employed.

Authentication server 600, for example, has an authentication processor (not illustrated) that performs the authentication processing on a wireless terminal (for example, wireless terminal 700) that requests access to intercom master device 500, based on authentication information that is exchanged in advance between authentication server 600 itself and wireless terminal 700. As the authentication processing, for example, Secure Sockets Later (SSL) authentication, authentication using a password that is exchanged in advance between authentication server 600 and wireless terminal 700, or the like can be employed.

Authentication server 600 has a terminal communication relay unit (not illustrated) that, under the condition that the success in authentication of the wireless terminal 700 takes place, establishes a connection to wireless terminal 700 and performs relay of the communication between wireless terminal 700 and intercom master device 500 (through wireless communication router 610).

When receiving the terminal-destined visiting notification from intercom master device 500, authentication server 600 transfers the notification to wireless terminal 700, but the transfer may take place before or after the communication between wireless terminal 700 and intercom master device 500 is established.

### Constitution of the Wireless Terminal

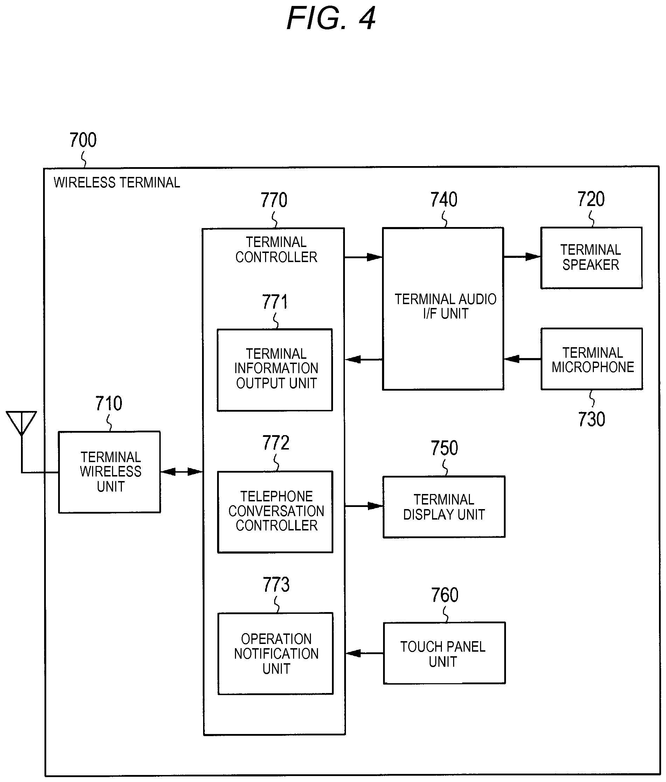

FIG. 4 is a block diagram illustrating an example of a constitution of wireless terminal 700.

In FIG. 4, wireless terminal 700 has terminal wireless unit 710, terminal speaker 720, terminal timer 730, terminal audio I/F unit 740, terminal display unit 750, touch panel unit 760, and terminal controller 770.

Terminal wireless unit 710 includes a wireless communication circuit and an antenna, and makes a connection to a wireless base station (not illustrated) that is connected to public network 620 through wireless communication line 701 described above in a manner that makes it possible to communicate with the wireless base station itself. Terminal wireless unit 710 makes a connection to authentication server 600 through the wireless base station and public network 620 in a manner that makes it possible to communicate with authentication server 600 itself. In addition, terminal wireless unit 710 makes a connection to intercom master device 500 through authentication server 600, public network 620, and wireless communication router 610 in a manner that makes it possible to communicate with intercom master device 500 while the relay of the communication by authentication server 600 is performed.

Terminal speaker 720 converts analog audio data that is output from terminal audio I/F unit 740 into audio, and outputs a result of the conversion.

Terminal timer 730 collects ambient audio, converts the ambient audio into analog audio data, and outputs a result of the conversion to terminal audio I/F unit 740.

Terminal audio I/F unit 740 converts digital audio data that is output from terminal controller 770, into analog audio data, performs adjustment of a signal level of the analog audio data, and outputs the signal level-adjusted analog audio data to terminal speaker 720. Furthermore, terminal audio I/F unit 740 adjusts a signal level of analog audio data that is output from terminal timer 730, into digital audio data, converts the signal level-adjusted analog audio data, and outputs a result of the conversion to terminal controller 770. The analog conversion and the digital conversion are performed by A/D and D/A converters (not illustrated), respectively.

Terminal audio I/F unit 740 may output data that is obtained by performing prescribed audio compression processing on data that results from performing the digital conversion on analog audio data which is output from terminal timer 730, as digital audio data, to terminal controller 770. Furthermore, in a case where the digital audio data that is output from terminal controller 770 is data that is obtained by performing the prescribed audio compression processing, terminal audio I/F unit 740 may perform prescribed audio decompression processing on the data, and then perform the digital/analog conversion.

The terminal display unit 750 includes a liquid crystal display portion of the touch panel-attached liquid crystal display that is described above, and reproduces digital image data that is output from terminal controller 770. In a case where the digital image data that is output from terminal controller 770 is data that is obtained by performing prescribed moving-image compression processing, prescribed moving-image decompression processing is performed on the data and image displaying of the resulting data is performed. Furthermore, under the control of terminal controller 770, terminal display unit 750 displays the terminal monitor button, the terminal telephone conversation button, the terminal unlocking button, and the terminal locking button, which are described above.

Various operations for wireless terminal 700 are performed on touch panel unit 760. For example, when the terminal monitor button, the terminal telephone conversation button, the terminal unlocking button, or the terminal unlocking button is displayed on terminal display unit 750, a clicking operation is performed on each of these on touch panel unit 760, and, when the operation is performed, touch panel unit 760 notifies terminal controller 770 that the clicking operation is performed.

When an operation of making a request to start a connection to intercom master device 500 is performed in touch panel unit 760, authentication processing by authentication server 600 is performed on terminal controller 770. When the succession in the authentication by authentication server 600 takes place, relay of communication between wireless terminal 700 and intercom master device 500 by authentication server 600 is started. When the relay of the communication is started, next, terminal controller 770 transmits a log-in request to intercom master device 500.

When receiving the terminal-destined visiting notification from intercom master device 500, terminal information output unit 771 of terminal controller 770 outputs call sound indicating that a person has come to entrance door 210, from terminal speaker 720. Accordingly, terminal information output unit 771 notifies user 220 that visitor 230 is at entrance door 210. Furthermore, terminal information output unit 771 displays the terminal monitor button, the terminal telephone conversation button, and the terminal unlocking button, which are described above, on terminal display unit 750.

When a checking operation, such as clicking on the terminal monitor button, is performed in wireless terminal 700, telephone conversation controller 772 of terminal controller 770 transmits the request to start the P2P communication to intercom master device 500. Accordingly, the P2P communication between wireless terminal 700 itself and intercom master device 500 is started, telephone conversation controller 772 starts to output the image of the entrance that is sent from intercom master device 500. Audio output, for example, is performed by terminal information output unit 771 outputting a digital signal for the call sound to terminal audio I/F unit 740. Furthermore, the audio output, for example, is performed by terminal information output unit 771 outputting a digital image data from intercom master device 500 to master device side display unit 540.

Furthermore, when a response operation, such as clicking on the terminal telephone conversation button, is performed in wireless terminal 700, telephone conversation controller 772 of terminal controller 770 transmits the telephone conversation starting instruction described above to intercom master device 500, and starts a telephone conversation between wireless terminal 700 and entrance slave device 400 through intercom master device 500. That is, telephone conversation controller 772 outputs the image of the vicinity of the entrance and audio that occurs in the vicinity of the entrance, which are sent from intercom master device 500, from terminal display unit 750 and terminal speaker 720, and transmits audio that occurs in the vicinity of wireless terminal 700, which is input by terminal timer 730, to intercom master device 500.

In a state where the terminal-destined visiting notification is not received, when the checking operation, such as clicking on the terminal monitor button, is performed, telephone conversation controller 772 transmits the image transmission request described above to intercom master device 500. The image of the vicinity of the entrance that is sent from intercom master device 500 in response to the request is output from terminal display unit 750.

When an unlocking instruction operation, such as clicking on the terminal unlocking button described above, is performed in wireless terminal 700, operation notification unit 773 of terminal controller 770 transmits the terminal's unlocking instruction described above to intercom master device 500.

Furthermore, when locking instruction operation is performed in wireless terminal 700, operation notification unit 773 of terminal controller 770 transmits the terminal's locking instruction described above to intercom master device 500. The locking instruction operation, for example, is a clicking operation that is performed on the terminal locking button which is displayed on terminal display unit 750.

These functional units of terminal controller 770, for example, are realized by application software that is installed in advance on wireless terminal 700. Furthermore, the transmission and reception of various pieces of information between authentication server 600 and intercom master device 500 by terminal controller 770 described above are performed through terminal wireless unit 710.

With this configuration, when receiving the terminal-destined visiting notification from intercom master device 500, wireless terminal 700 can output information indicating that a person has come to entrance door 210, and when the unlocking instruction operation is performed in wireless terminal 700, can transmit the terminal's unlocking instruction to intercom master device 500.

### Operation of the Intercom Master Device

Next, the operation of intercom master device 500 is described. At this point, a description is provided with a focus on main operation relating to communication with wireless terminal 700.

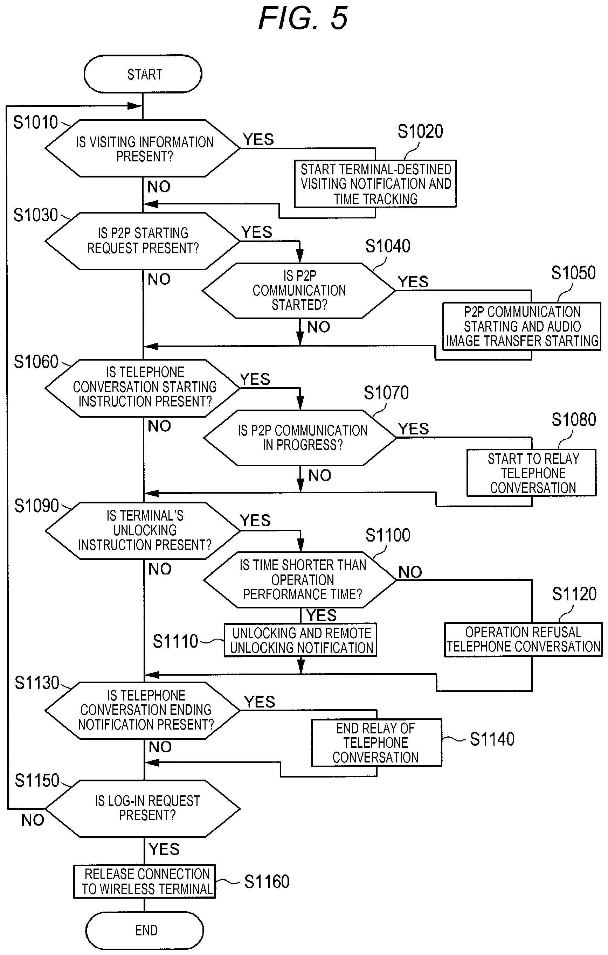

FIG. 5 is a flowchart illustrating an example of the operation of intercom master device 500. Intercom master device 500, for example, performs the authentication processing on wireless terminal 700 in response to the log-in request from wireless terminal 700, and starts processing, which will be described below, whenever the authentication succeeds. In a case where the authentication fails, intercom master device 500, for example, transmits a response indicating the failure of the authentication to wireless terminal 700.

In Step S1010, terminal notification unit 551 determines whether or not the visiting notification is received from entrance slave device 400. In a case where the visiting notification is received (YES in S1010), terminal notification unit 551 causes the processing to proceeds to Step S1020. Furthermore, in a case where the visiting notification is not received (NO in S1010), terminal notification unit 551 causes the process to proceed to Step S1030 that will be described below.

In Step S1020, terminal notification unit 551 transmits the terminal-destined visiting notification to wireless terminal 700 through authentication server 600. Furthermore, electronic lock controller 553 starts to track time using a timer or the like.

In Step S1030, telephone conversation relay unit 552 determines whether or not a P2P starting request that makes a request to start the P2P communication is received from wireless terminal 700. In a case where the P2P starting request is received (YES in S1030), telephone conversation relay unit 552 causes the processing to proceed to Step S1040. Furthermore, in a case where the P2P starting request is not received (NO in S1030), telephone conversation relay unit 552 causes the processing to proceed to Step S1060 that will be described below.

In Step S1040, telephone conversation relay unit 552 determines whether or not to start the P2P communication with wireless terminal 700. In a case where the P2P communication is started (YES in Step S1040), telephone conversation relay unit 552 causes the processing to proceed to Step S1050. Furthermore, in a case where the P2P communication is not started (NO in Step S1040), telephone conversation relay unit 552 causes the processing to proceed to Step S1060 that will be described below. In the case where the P2P communication is not started, telephone conversation relay unit 552 may transmit an operation refusal notification to wireless terminal 700 in the same manner as in Step S1120 that will be described below.

In Step S1050, telephone conversation relay unit 552 starts the P2P communication and starts to transfer an audio image that is sent from entrance slave device 400, to wireless terminal 700. However, telephone conversation relay unit 552 may not necessarily start transfer the audio.

In Step S1060, telephone conversation relay unit 552 determines whether or not the telephone conversation starting instruction is received from wireless terminal 700. In a case where the telephone conversation starting instruction is received (YES in S1060), telephone conversation relay unit 552 causes the processing to proceed to Step S1070. Furthermore, in a case where the telephone conversation starting instruction is not received (NO in S1060), telephone conversation relay unit 552 causes the processing to proceed to Step S1090 that will be described below.

In Step S1070, telephone conversation relay unit 552 determines whether or not the P2P communication with wireless terminal 700 is started. In a case where the P2P communication is started (YES in S1070), telephone conversation relay unit 552 causes the processing to proceed to Step S1080. Furthermore, in a case where the P2P communication is not started (NO in S1070), telephone conversation relay unit 552 causes the processing to proceed to Step S1090 that will be described below. In the case where the P2P communication is not started, telephone conversation relay unit 552 may transmit the operation refusal notification to wireless terminal 700 in the same manner as in Step S1120 that will be described below.

In Step S1080, telephone conversation relay unit 552 starts telephone conversation relay (transfer of audio data and image data) between entrance slave device 400 and wireless terminal 700.

In Step S1090, electronic lock controller 553 determines whether or not the terminal's unlocking instruction is received from wireless terminal 700. In a case where the terminal's unlocking instruction is received (YES in S1090), electronic lock controller 553 causes the processing to proceed to Step S1100. Furthermore, in a case where the terminal's unlocking instruction is not received (NO in S1090), electronic lock controller 553 causes the processing to proceed to Step S1130 that will be described below.

In Step S1100, electronic lock controller 553 determines whether or not the time at which the time tracking is finally started in Step S1020 is shorter than an operation performance time that is prescribed in advance as a time length during which electronic lock 300 has to be unlocked with a remote operation from wireless terminal 700. That is, electronic lock controller 553 make a determination of whether or not the unlocking is enabled. The operation performance time is a maximum value of a time that corresponds to a period of time from when user 220 of wireless terminal 700 knows the presence of a visitor and to when a suitable telephone conversation or the like is carried out and the unlocking instruction operation is performed with wireless terminal 700, and for example, is one minute.

In a case where the time is shorter than the operation performance time (YES in S1100), electronic lock controller 553 causes the processing to proceed to Step S1110. Furthermore, in a case where the time exceeds the operation performance time, or in a case where the time tracking in Step S1020 is not started (NO in S1100), electronic lock controller 553 causes the processing to proceed to Step S1120 that will be described below.

In Step S1110, electronic lock controller 553 unlocks electronic lock 300 and transmits a terminal-destined unlocking notification to wireless terminal 700. Electronic lock controller 553 may transmit the unlocking request to electronic lock 300, and based on the fact that electronic lock 300 replies with an unlocking response indicating that the unlocking is performed, may determine that the unlocking is performed.

In S1120, electronic lock controller 553 transmits the operation refusal notification to wireless terminal 700 without unlocking electronic lock 300.

In Step S1130, telephone conversation relay unit 552 determines whether or not a telephone conversation ending notification is received. For example, in a case where an operation of ending a telephone conversation is performed in wireless terminal 700, the telephone conversation ending notification is transmitted from wireless terminal 700. In a case where the telephone conversation ending notification is received (YES in S1130), telephone conversation relay unit 552 causes the processing to proceed to Step S1140. Furthermore, in a case where the telephone conversation ending notification is not received (NO in Step S1130), telephone conversation relay unit 552 causes the processing to proceed to Step S1150 that will be described below.

In Step S1140, telephone conversation relay unit 552 ends the telephone conversation relay between entrance slave device 400 and wireless terminal 700.

In Step S1150, master device side controller 550 determines whether or not a log-out request is received. For example, in a case where a log-out operation is performed in wireless terminal 700, the log-out request is transmitted from wireless terminal 700. In a case where the log-out request is not received (NO in S1150), master device side controller 550 causes the processing to return to Step S1010. Furthermore, in a case where the log-out request is received (YES in S1150), master device side controller 550 causes the processing to proceed to Step S1160.

In Step S1160, master device side controller 550 releases the connection to wireless terminal 700.

With this operation, intercom master device 500 makes a connection to wireless terminal 700 that is carried outside of building 200 in a manner that makes it possible to communicate with wireless terminal 700 itself, and the identifying of visitor 230 at entrance door 210, the telephone conversation with visitor 230, and the operation of unlocking entrance door 210 are possible from wireless terminal 700. Furthermore, intercom master device 500 can limit the unlocking with such a remote operation to a prescribed period of time after the call button of entrance slave device 400 is operated.

Intercom master device 500 may start the time tracking with other timings corresponding to the visiting notification, such as a timing at which telephone conversation relay is started, as a reference. Furthermore, intercom master device 500 may determine that the visiting notification is received, based on other events, such as being in a telephone conversation state, without particularly performing the time tracking. Subsequently, intercom master device 500 may cause the processing to proceed to Step S1110 and may perform the unlocking based on operation of wireless terminal 700.

### Operation of the System

Last, operation of intercom system 100 is described.

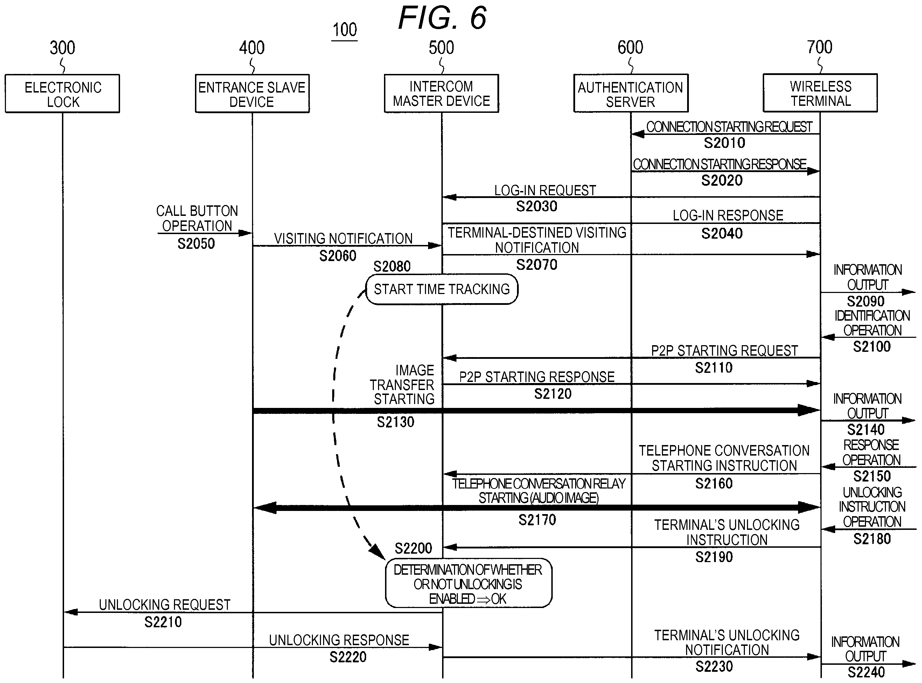

FIG. 6 is a sequence diagram illustrating an example of the operation of intercom system 100, and illustrates an example of a case where the unlocking operation is performed when visitor 230 is at entrance door 210.

In wireless terminal 700, when application software for checking the vicinity of the entrance and operating electronic lock 300 of entrance door 210, a connection starting request is transmitted from wireless terminal 700 to authentication server 600 (S2010). When authentication server 600 succeeds in authentication of wireless terminal 700, authentication server 600 replies with a connection starting response (S2020). Accordingly, a state where the relay of the communication by authentication server 600 is possible is attained.

Although not illustrated, intercom master device 500 makes a request to authentication server 600 for the same connection as well when powered on and so forth, and authentication server 600 performs the authentication on intercom master device 500 as well.

In addition, the log-in request is transmitted from wireless terminal 700 to intercom master device 500 (S2030), and when intercom master device 500 succeeds in the authentication of wireless terminal 700, intercom master device 500 replies with a log-in response indicating the success in authentication (S2040).

When in this state, the call button of entrance slave device 400 is operated (S2050), the visiting notification is transmitted to intercom master device 500 (S2060), and the terminal-destined visiting notification is transmitted from intercom master device 500 that receives the visiting notification is transmitted to wireless terminal 700 (S2070). These are notified, and transmission of an audio-accompanied image being acquired in entrance slave device 400 to intercom master device 500 is started as well. Furthermore, in intercom master device 500, the time tracking of the elapsed time after the visiting notification is received is started (S2080). In wireless terminal 700 that receives the visiting terminal notification, information indicating that visitor 230 is at entrance door 210 is output (S2090).

When the checking operation described above is performed by user 220 who receives an information output notifying the presence of a visitor (S2100), the P2P starting request is transmitted from wireless terminal 700 to intercom master device 500 (S2110). Intercom master device 500 replies with a P2P starting response (S2120), and transfer of audio and an image from entrance slave device 400 to wireless terminal 700 is started (S2130). As a result, in wireless terminal 700, an output, such as the image of the vicinity of the entrance, is started (S2140).

It is desirable that at this stage, intercom master device 500 does not output audio which occurs in the vicinity of the entrance. Audio data may be controlled in such a manner that in intercom master device 500, the audio data is not transferred to wireless terminal 700, and may be controlled in such a manner that in wireless terminal 700, the audio data is not audio-output.

FIG, 7 is a plan diagram illustrating an example of a display state of wireless terminal 700 when the terminal-destined visiting notification is received and the checking operation is performed.

As illustrated in FIG, 7, image 811 that is captured in entrance slave device 400 and place icon 812 indicating entrance slave device 400 that is a transmission source of an image are displayed on touch panel-attached liquid crystal display 751 of wireless terminal 700. Furthermore, monitor icon 813 that is the terminal monitor button, telephone conversation icon 814 that is the terminal telephone conversation button, and electronic lock icon 815 that is a button that serves as both of terminal locking button and terminal unlocking button are displayed on touch panel-attached liquid crystal display 751.

When the information output is received and the response operation (clicking on telephone conversation icon 814) is performed by user 220 in wireless terminal 700 (S2150 in FIG. 6), the telephone conversation starting instruction is transmitted from wireless terminal 700 to intercom master device 500 (S2160). As a result, intercom master device 500 starts transfer of audio from wireless terminal 700 to entrance slave device 400 and relay of the telephone communication between wireless terminal 700 and entrance slave device 400 (S2170).

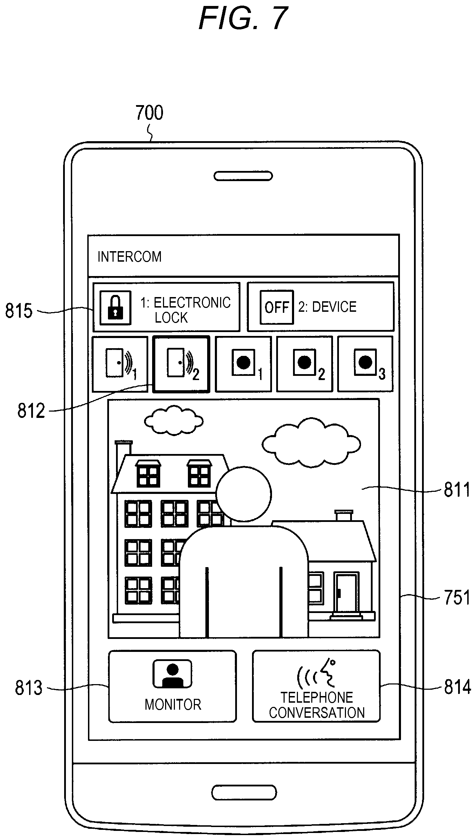

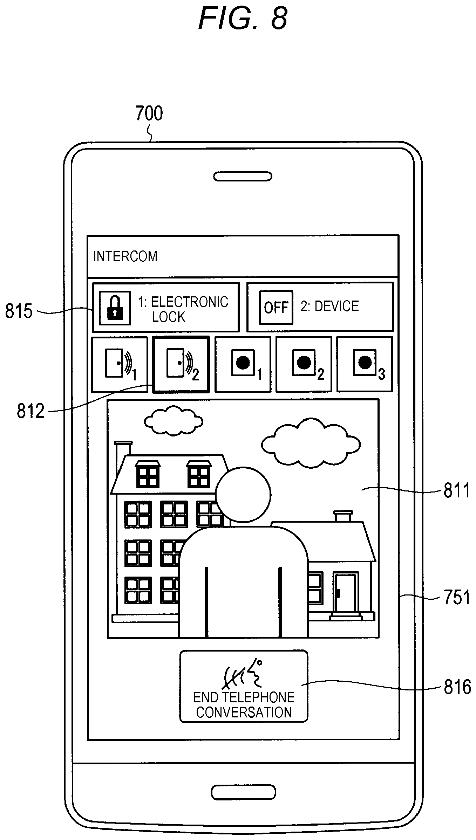

FIG. 8 is a plan diagram illustrating an example of the display state of wireless terminal 700 when the telephone conversation with entrance slave device 400 is started, and corresponds to FIG. 7.

As illustrated in FIG. 8, instead of monitor icon 813 and telephone conversation icon 814 in FIG. 7, telephone conversation ending icon 816 for performing an operation of ending a telephone conversation is displayed on touch panel-attached liquid crystal display 751 of wireless terminal 700.

When the unlocking instruction operation (clicking on electronic lock icon 815) is performed, by user 220 who identifies visitor 230, in wireless terminal 700 (S2180 in FIG. 6), the terminal's unlocking instruction is transmitted from wireless terminal 700 to intercom master device 500 (S2190). In order to prevent the unlocking instruction operation from being performed erroneously, when performing the unlocking instruction operation, wireless terminal 700 may display a pop screen for the double-checking of the operation by user 220.

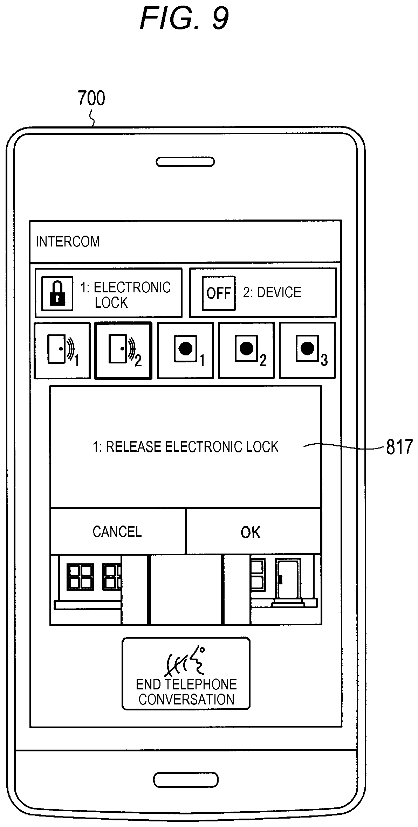

FIG. 9 is a plan diagram illustrating an example of the display state of wireless terminal 700 when the unlocking instruction operation is performed, and corresponds to FIGs. 7 and 8.

As illustrated in FIG. 9, pop screen 817 for checking the unlocking instruction operation is displayed on touch panel-attached liquid crystal display 751 of wireless terminal 700. Operation notification unit 773 of wireless terminal 700 transmits the terminal's unlocking instruction to intercom master device 500 under the condition that an operation (clicking on an OK button) indicating that the unlocking is intended is performed on pop screen 817.

The result of determining in intercom master device 500 whether or not the unlocking is enabled in a case where the elapsed time after the visiting notification is received is shorter than the operation performance time is that the unlocking is approved (OK) (S2200 in FIG. 6), and the unlocking request is transmitted from intercom master device 500 to electronic lock 300 (S2210).

In electronic lock 300 that receives the unlocking request, the unlocking of entrance door 210 is performed, and the unlocking response indicating that the unlocking is completed is sent as a response to intercom master device 500 (S2220). The terminal-destined unlocking notification is transmitted from intercom master device 500 wireless terminal 700 (S2230), and information indicating that the unlocking operation succeeds is output from wireless terminal 700 (S2240).

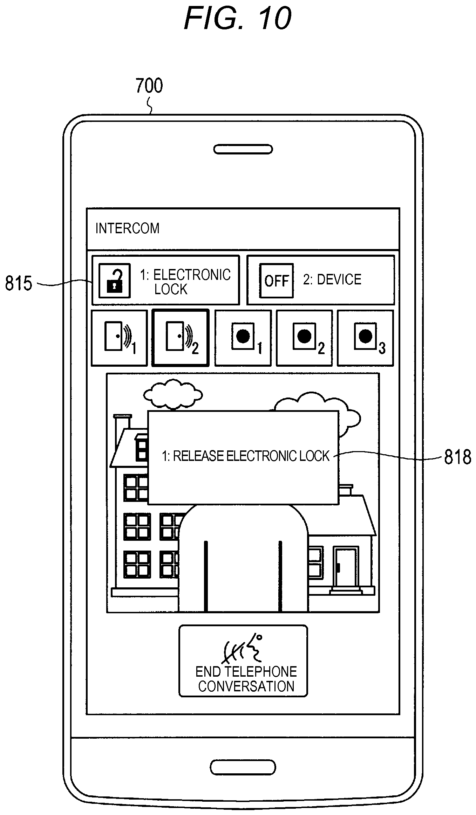

FIG. 10 is a plan diagram illustrating an example of the display state of wireless terminal 700 when the unlocking operation succeeds, and corresponds to FIGs. 7 to 9.

As illustrated in FIG. 10, pop screen 818 indicating that the unlocking of electronic lock 300 succeeds is displayed on touch panel-attached liquid crystal display 751 of wireless terminal 700. Furthermore, the touch panel-attached liquid crystal display 751 changes electronic lock icon 815 in FIGs. 7 to 9 from an external appearance indicating that electronic lock 300 is locked to an external appearance indicating that electronic lock 300 is unlocked.

With this operation, when visitor 230 is at entrance door 210, intercom system 100 can carry out a telephone conversation with user 220 from wireless terminal 700, and can unlock electronic lock 300 of entrance door 210 according to an operation in wireless terminal 700 of user 220.

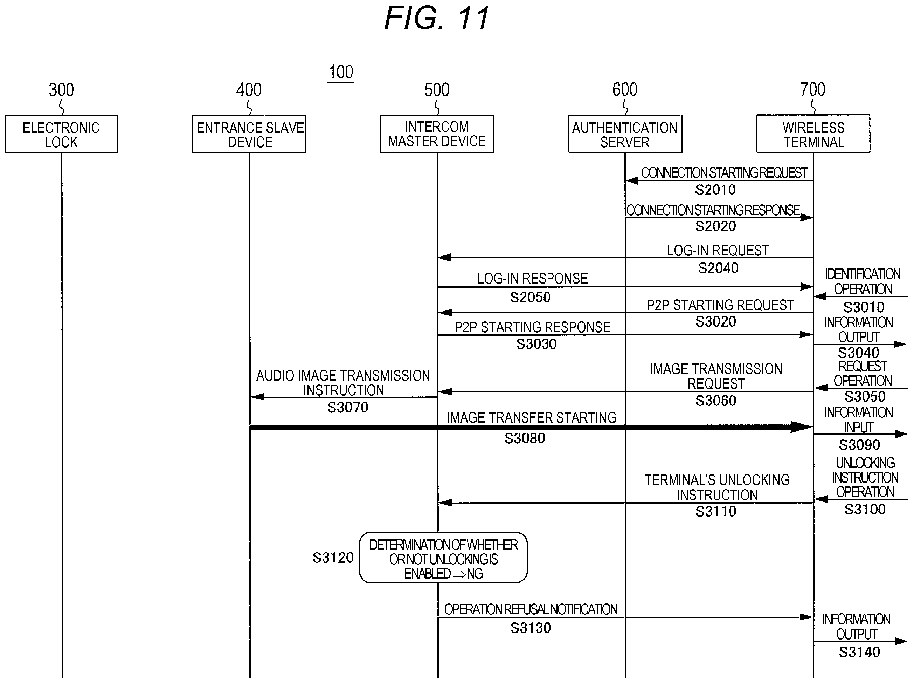

FIG. 11 is a sequence diagram illustrating an example of the operation of intercom system 100, and illustrates an example of a case where the unlocking operation is performed when visitor 230 is not at entrance door 210. The same step number is given to the same portion as in FIG. 6, and a description thereof is omitted.

In order to remotely check the vicinity of the entrance of building 200, a prescribed checking operation (for example, clicking on place icon 812 indicating entrance slave device 400) is performed by a user of wireless terminal 700 (for example, user 220) in wireless terminal 700 (S3010). When this is done, the P2P starting request and the P2P starting response are exchanged (S3020 and S3030), and information indicating that the P2P communication with intercom master device 500 is established is output from wireless terminal 700 (S3040).

In addition, in wireless terminal 700, when a request operation (for example, clicking on monitor icon 813) of requesting the image of the vicinity of the entrance is performed (S3050), the image transmission request is transmitted from wireless terminal 700 to intercom master device 500 (S3060), and the audio image transmission instruction is transmitted from intercom master device 500 to entrance slave device 400 (S3070). As a result, the image of the vicinity of the entrance is transferred from entrance slave device 400 to wireless terminal 700 (S3080), and the image of the vicinity of the entrance is output from wireless terminal 700 (S3090).

When the unlocking instruction operation is performed by the user of wireless terminal 700 in wireless terminal 700 (S3100), the terminal's unlocking instruction is transmitted from wireless terminal 700 to intercom master device 500 (S3110). However, visitor 230 is not at entrance door 210, and the visiting notification is not received in intercom master device 500. For this reason, the result of determining in intercom master device 500 whether or not the unlocking is enabled is that the unlocking is not approved (NG) (S3120). The operation refusal notification is transmitted from intercom master device 500 to wireless terminal 700 (S3130), and information indicating that the unlocking fails (an operational error) is output from wireless terminal 700 (S3140).

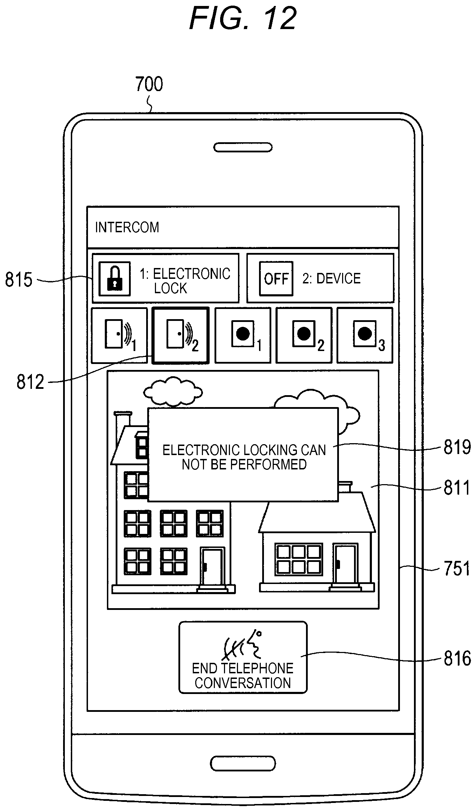

FIG. 12 is a plan diagram illustrating an example of the display state of wireless terminal 700 when the unlocking operation fails, and corresponds to FIGs. 7 to 10.

As illustrated in FIG. 12, pop screen 819 indicating that the unlocking of electronic lock 300 fails is displayed on touch panel-attached liquid crystal display 751 of wireless terminal 700.

With this operation, intercom system 100 can prohibit the unlocking of electronic lock 300 of entrance door 210 that is based on the operation of wireless terminal 700, while visitor 230 is not at entrance door 210.

### Effects According to the Present Embodiment

As described above, intercom system 100 according to the present disclosure includes electronic lock 300 that is provided in entrance door 210 of building 200, entrance slave device 400 that is installed in the vicinity of entrance door 210, intercom master device 500 that is installed inside of building 200, and wireless terminal (communication terminal) 700 that it is possible to carry outside of building 200.

When it is detected that a person has come to entrance door 210, entrance slave device 400 transmits the visiting notification to intercom master device 500, and when receiving the visiting notification, intercom master device 500 transmits the terminal-destined visiting notification to wireless terminal 700. When receiving the terminal-destined visiting notification, wireless terminal 700 outputs the information indicating that a person has come to entrance door 210, and when the unlocking instruction operation is performed in wireless terminal 700, transmits the terminal's unlocking instruction to intercom master device 500. When receiving the terminal's unlocking instruction, intercom master device 500 unlocks electronic lock 300 under the condition that the visiting notification has been received. That is, although the terminal's unlocking instruction is received, in a case where the visiting notification is not received, more precisely, in a case where a timing at which entrance door 210 has to be unlocked does not come, intercom master device 500 does not unlock entrance door 210.

Accordingly, intercom system 100 according to the present disclosure can prohibit the unlocking from being performed with the operation from wireless terminal 700 when a person does not come to entrance door 210, while making it possible to unlock entrance door 210 with the operation from wireless terminal 700. Therefore, intercom system 100 can perform the operation of unlocking the entrance door from the communication terminal, in a state where a higher level of security is secured compared with that in the related art.

### Modification Example of the Present Embodiment

A constitution of each device that makes it possible for the device to make a connection is not limited to the example described above. For example, wireless terminal 700 may perform directly the communication with intercom master device 500 or wireless communication router 610, using short- or middle-distance wireless communication, such as WiFi (a registered trademark) or a Wireless Local Area Network (LAN).

Furthermore, the communication terminal that receives the terminal-destined visiting notification from entrance slave device 400 and performs the information output, and that transmits the terminal's unlocking instruction to intercom master device 500 when the unlocking instruction operation is performed is not limited to the example described above. The communication terminal may be a tablet type information terminal or a notebook personal computer, and may be a desktop type personal computer that is installed outside of building 200.

Furthermore, the device that imposes a limitation on the unlocking that depends on whether or not the visiting notification is received is assumed to be intercom master device 500 according to the embodiment, which is described above, but is limited to this. For example, in authentication server 600, wireless communication router 610, or wireless terminal 700, the terminal's unlocking instruction may be transmitted or transferred to intercom master device 500 under the condition that the terminal-destined visiting notification is received. Even in these cases, as a result, intercom master device 500 performs the operation of unlocking electronic lock 300 under the condition that the visiting notification has been received.

Furthermore, one portion of the constitution of each device, which is described above, may be physically separated from another portion of the constitution of the device. In this case, in these constitutions, there is a need to individually include a communicator for performing the communication with each other. Furthermore, multiple devices may be constituted into one piece, such as when electronic lock 300 and entrance slave device 400 are combined into one device.

### Wrap-up of the Present Disclosure

An intercom system according to the present disclosure is an intercom system that includes an electronic lock that is provided in an entrance door of a building, an entrance slave device that is installed in the vicinity of the entrance door, an intercom master device that is installed inside of the building, and a communication terminal that it is possible to carry outside of the building or is installed outside of the building. In the intercom system, the entrance slave device transmits a visiting notification to the intercom master device when it is detected that a person has come to the entrance door, the intercom master device transmits a terminal-destined visiting notification to the communication terminal when receiving the visiting notification, the communication terminal outputs information indicating that the person has come to the entrance door when receiving the terminal-destined visiting notification and transmits a terminal's unlocking instruction to the intercom master device when an unlocking instruction operation is performed in the communication terminal, and the intercom master device unlocks the electronic lock under the condition that the visiting notification has been received, when receiving the terminal's unlocking instruction.

In the intercom system, the intercom master device may receive the terminal's unlocking instruction and when the electronic lock is not unlocked, transmit an operation refusal notification to the communication terminal, and when receiving the operation refusal notification, the communication terminal may output information indicating an operational error.

Furthermore, in the intercom system, the intercom master device may unlock the electronic lock under the condition that the terminal's unlocking instruction is received within a period of time that is determined with a point in time at which the visiting notification is received serving as a reference.

Furthermore, in the intercom system, the communication terminal may be a wireless terminal that it is possible to carry outside of the building.

An intercom master device according to the present disclosure is an intercom master device that is used in an intercom system which includes an electronic lock that is provided in an entrance door of a building, an entrance slave device that is installed in the vicinity of the entrance door, an intercom master device that is installed inside of the building, and a communication terminal that it is possible to carry outside of the building or is installed outside of the building. The intercom master device includes a terminal notification unit that transmits a terminal-destined visiting notification to the communication terminal when receiving from the entrance slave device a visiting notification indicating that a person has come to the entrance door, and an electronic lock controller that unlocks the electronic lock under the condition that the visiting notification has been received, when receiving from the communication terminal a terminal's unlocking instruction indicating that an unlocking instruction operation has been performed in the communication terminal.

A communication method according to the present disclosure is a communication method in an intercom system that includes an electronic lock that is provided in an entrance door of a building; an entrance slave device that is installed in the vicinity of the entrance door; an intercom master device that is installed inside of the building; and a communication terminal that it is possible to carry outside of the building or is installed outside of the building. The communication method has a step of causing the entrance slave device to transmit a visiting notification to the intercom master device when it is detected that a person has come to the entrance door, a step of causing the intercom master device to transmit a terminal-destined visiting notification to the communication terminal when receiving the visiting notification, a step of causing the communication terminal to output information indicating that the person has come to the entrance door when receiving the terminal-destined visiting notification, a step of causing the communication terminal to transmit a terminal's unlocking instruction to the intercom master device when an unlocking instruction operation is performed in the communication terminal, and a step of causing the intercom master device to unlock the electronic lock under the condition that the visiting notification has been received, when receiving the terminal's unlocking instruction from the communication terminal.

### Another Embodiment

Another embodiment of the present disclosure is described. The embodiment uses the block diagrams and flowcharts for description in FIGs. 1 to 5.

### Operation of the System

According to the embodiment, operation of intercom system 100 is described.

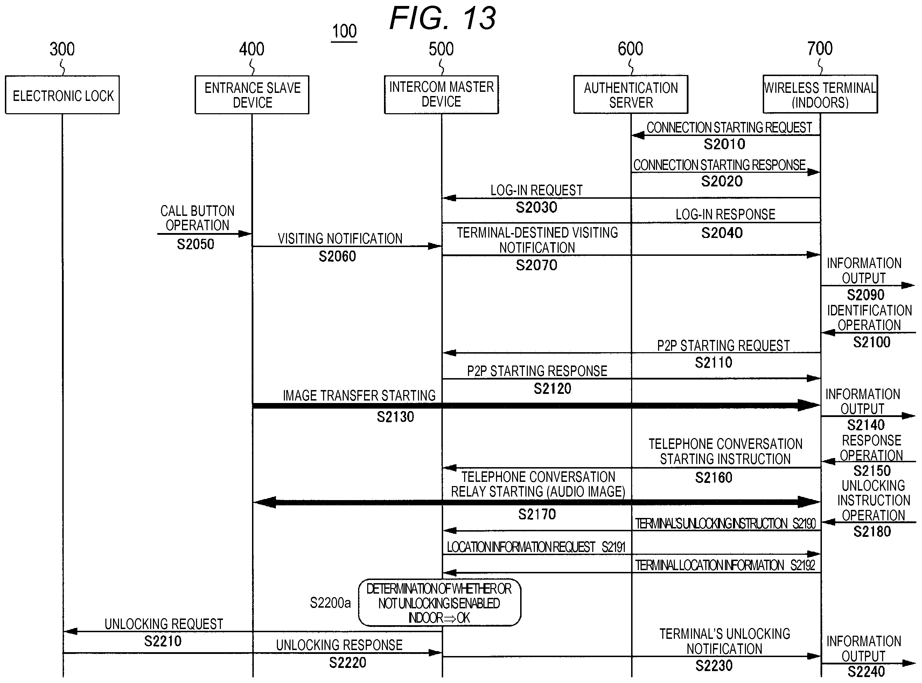

FIG. 13 is a sequence diagram illustrating an example of the operation of intercom system 100, and illustrates an example of a case where the unlocking operation is performed when wireless terminal 700 is located inside of building 200 (indoors).

In wireless terminal 700, when application software for checking the vicinity of the entrance and operating electronic lock 300 of entrance door 210, a connection starting request is transmitted from wireless terminal 700 to authentication server 600 (S2010). When authentication server 600 succeeds in authentication of wireless terminal 700, authentication server 600 replies with a connection starting response (S2020). Accordingly, a state where the relay of the communication by authentication server 600 is possible is attained.

Although not illustrated, intercom master device 500 makes a request to authentication server 600 for the same connection as well when powered on and so forth, and authentication server 600 performs the authentication on intercom master device 500 as well.

In addition, the log-in request is transmitted from wireless terminal 700 to intercom master device 500 (S2030), and when intercom master device 500 succeeds in the authentication of wireless terminal 700, intercom master device 500 replies with a log-in response indicating the success in authentication (S2040).

When in this state, the call button of entrance slave device 400 is operated (S2050), the visiting notification is transmitted to intercom master device 500 (S2060), and the terminal-destined visiting notification is transmitted from intercom master device 500 that receives the visiting notification is transmitted to wireless terminal 700 (S2070). These are notified, and transmission of an audio-accompanied image being acquired in entrance slave device 400 to intercom master device 500 is started as well. In wireless terminal 700 that receives the visiting terminal notification, information indicating that visitor 230 is at entrance door 210 is output (S2090).

When the checking operation is performed by user 220 who receives an information output notifying the presence of a visitor (S2100), the P2P starting request is transmitted from wireless terminal 700 to intercom master device 500 (S2110). Intercom master device 500 replies with a P2P starting response (S2120), and transfer of audio and an image from entrance slave device 400 to wireless terminal 700 is started (S2130). As a result, in wireless terminal 700, an output, such as the image of the vicinity of the entrance, is started (S2140).

It is desirable that at this stage, intercom master device 500 does not output audio which occurs in the vicinity of the entrance. Audio data may be controlled in such a manner that in intercom master device 500, the audio data is not transferred to wireless terminal 700, and may be controlled in such a manner that in wireless terminal 700, the audio data is not audio-output.

According to this embodiment, a plan diagram illustrating an example of the display state of wireless terminal 700 when the terminal-destined visiting notification is received and the checking operation is performed is also the same as that in FIG. 7.

As illustrated in FIG, 7, image 811 that is captured in entrance slave device 400 and place icon 812 indicating entrance slave device 400 that is a transmission source of an image are displayed on touch panel-attached liquid crystal display 751 of wireless terminal 700. Furthermore, monitor icon 813 that is the terminal monitor button, telephone conversation icon 814 that is the terminal telephone conversation button, and electronic lock icon 815 that is a button that serves as both of terminal locking button and terminal unlocking button are displayed on touch panel-attached liquid crystal display 751.

When the information output is received and the response operation (clicking on telephone conversation icon 814) is performed by user 220 in wireless terminal 700 (S2150 in FIG. 13), the telephone conversation starting instruction is transmitted from wireless terminal 700 to intercom master device 500 (S2160). As a result, intercom master device 500 starts transfer of audio from wireless terminal 700 to entrance slave device 400 and relay of the telephone communication between wireless terminal 700 and entrance slave device 400 (S2170).

According to this embodiment, a plan diagram indicating an example of the display state of wireless terminal 700 when starting the telephone conversation with entrance slave device 400 is started is also the same as that in FIG. 8, and corresponds to FIG. 7.

As illustrated in FIG. 8, instead of monitor icon 813 and telephone conversation icon 814 in FIG. 7, telephone conversation ending icon 816 for performing an operation of ending a telephone conversation is displayed on touch panel-attached liquid crystal display 751 of wireless terminal 700.

When the unlocking instruction operation (clicking on electronic lock icon 815) is performed, by user 220 who identifies visitor 230, in wireless terminal 700 (S2180 in FIG. 13), the terminal's unlocking instruction is transmitted from wireless terminal 700 to intercom master device 500 (S2190). In order to prevent the unlocking instruction operation from being performed erroneously, when performing the unlocking instruction operation, wireless terminal 700 may display a pop screen for the double-checking of the operation by user 220.

According to this embodiment, a plan diagram indicating an example of the display state of wireless terminal 700 when the unlocking instruction operation is performed is also the same as that in FIG. 9, and corresponds to FIGs. 7 and 8.

As illustrated in FIG. 9, pop screen 817 for checking the unlocking instruction operation is displayed on touch panel-attached liquid crystal display 751 of wireless terminal 700. Operation notification unit 773 of wireless terminal 700 transmits the terminal's unlocking instruction to intercom master device 500 under the condition that an operation (clicking on an OK button) indicating that the unlocking is intended is performed on pop screen 817.

Intercom master device 500 that receives the terminal's unlocking instruction transmits a location information request to wireless terminal 700 (S2191 in FIG. 13), and receives terminal location information from wireless terminal 700 (S2192). Because the terminal location information indicates that wireless terminal 700 is located indoors, the result of determining in intercom master device 500 whether or not the unlocking is enabled is that the unlocking is approved (OK) (S2200a) and the unlocking request is transmitted from intercom master device 500 to electronic lock 300 (S2210).

In electronic lock 300 that receives the unlocking request, the unlocking of entrance door 210 is performed, and the unlocking response indicating that the unlocking is completed is sent as a response to intercom master device 500 (S2220). The terminal-destined unlocking notification is transmitted from intercom master device 500 wireless terminal 700 (S2230), and information indicating that the unlocking operation succeeds is output from wireless terminal 700 (S2240).

According to this embodiment, a plan diagram indicating an example of the display state of wireless terminal 700 when the unlocking operation succeeds is also the same as that in FIG. 10, and corresponds to FIGs. 7 to 9.

As illustrated in FIG. 10, pop screen 818 indicating that the unlocking of electronic lock 300 succeeds is displayed on touch panel-attached liquid crystal display 751 of wireless terminal 700. Furthermore, the touch panel-attached liquid crystal display 751 changes electronic lock icon 815 in FIGs. 7 to 9 from an external appearance indicating that electronic lock 300 is locked to an external appearance indicating that electronic lock 300 is unlocked.

With this operation, when intercom master device 500 is located inside of building 200, intercom system 100 can unlock electronic lock 300 of entrance door 210 according to an operation in wireless terminal 700 of user 220.

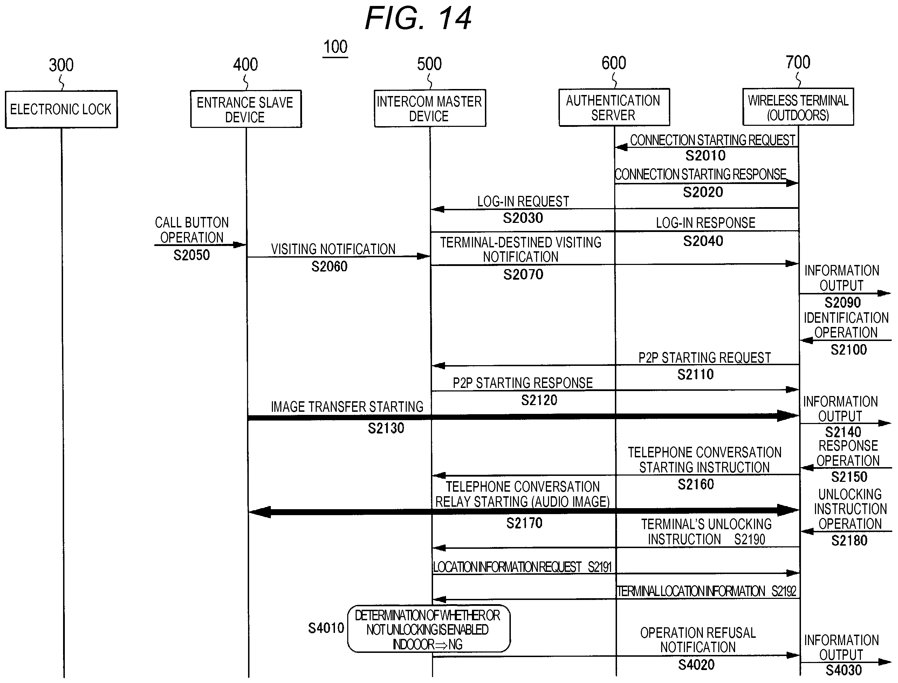

FIG. 14 is a sequence diagram illustrating an example of the operation of intercom system 100, and illustrates an example of a case where the unlocking operation is performed when wireless terminal 700 is located outside of building 200 (outdoors). The same step number is given to the same portion as in FIG. 13, and a description thereof is omitted.

In wireless terminal 700 that is located outdoors, when the unlocking instruction operation is performed by the user (for example, user 220) of wireless terminal 700 (S2180), as described above, the terminal's instruction for unlocking, the location information request, and the terminal location information are exchanged between wireless terminal 700 and intercom master device 500 (S2190 to S2192). However, because the terminal location information indicates that wireless terminal 700 is not located indoors, the result of determining in intercom master device 500 whether or not the unlocking is enabled is that the unlocking is not approved (NG) (S4010). The operation refusal notification is transmitted from intercom master device 500 to wireless terminal 700 (S4020), and information indicating that the unlocking fails (an operational error) is output from wireless terminal 700 (S4030).

According to this embodiment, a plan diagram indicating an example of the display state of wireless terminal 700 when the unlocking instruction fails is also the same as that in FIG. 12, and corresponds to FIGs. 7 to 10.

As illustrated in FIG. 12, pop screen 819 indicating that the unlocking of electronic lock 300 fails is displayed on touch panel-attached liquid crystal display 751 of wireless terminal 700.

With this operation, intercom system 100 can prohibit the unlocking of electronic lock 300 of entrance door 210 that is based on the operation of wireless terminal 700 that is located outdoors.

### Effects according to the Present Embodiment

As described above, intercom system 100 according to the present disclosure includes electronic lock 300 that is provided in entrance door 210 of building 200, entrance slave device 400 that is installed in the vicinity of entrance door 210, intercom master device 500 that is installed inside of building 200, and wireless terminal (communication terminal) 700 that it is possible to carry outside of building 200.

When it is detected that a person has come to entrance door 210, entrance slave device 400 transmits the visiting notification to intercom master device 500, and when receiving the visiting notification, intercom master device 500 transmits the terminal-destined visiting notification to wireless terminal 700. When receiving the terminal-destined visiting notification, wireless terminal 700 outputs the information indicating that a person has come to entrance door 210, and when the unlocking instruction operation is performed in wireless terminal 700, transmits the terminal's unlocking instruction to intercom master device 500. When receiving the terminal's unlocking instruction, intercom master device 500 unlocks electronic lock 300 under the condition that wireless terminal 700 is located inside of building 200. That is, although the terminal's unlocking instruction is received, in a case where wireless terminal 700 is not located inside of building 200, intercom master device 500 does not unlock entrance door 210.

Accordingly, intercom system 100 according to the present disclosure can prohibit the unlocking from being performed with the operation from wireless terminal 700 when wireless terminal 700 is located outdoors, while making it possible to unlock entrance door 210 with the operation from wireless terminal 700. Therefore, intercom system 100 can perform the operation of unlocking the entrance door from the communication terminal, in a state where a higher level of security is achieved compared with that in the related art.

### Modification Example of the Present Embodiment

A constitution of each device that makes it possible for the device to make a connection is not limited to the example described above. For example, wireless terminal 700 may perform directly the communication with intercom master device 500 or wireless communication router 610, using short- or middle-distance wireless communication, such as WiFi (a registered trademark) or Wireless Local Area Network (LAN). For example, it is possible that wireless terminal 700 switches between enabling and disabling a short-and middle-distance wireless communication function. When the short- and middle-distance wireless communication function is disabled, wireless terminal 700 perform communication with intercom master device 500 through authentication server 600. Furthermore, when the short- and middle-distance wireless communication function is enabled and wireless terminal 700 is located within a range of communication with wireless communication router 610, wireless terminal 700 makes a direct connection wireless communication router 610 and performs the communication with intercom master device 500.

Furthermore, a timing and a method at and in which intercom master device 500 acquires the terminal location information are not limited to the example described above. For example, intercom master device 500 may periodically transmit the location information request to wireless terminal 700, without depending on whether or not the terminal's unlocking instruction is received. Furthermore, wireless terminal 700 may periodically transmit the terminal location information to intercom master device 500 or may cause the terminal location information to accompany the terminal's unlocking instruction and other pieces of information that are transmitted to intercom master device 500, without depending on whether or not the location information request is received.

Furthermore, a method of determining whether or not wireless terminal 700 is located inside of building 200 is not limited to the example described above. For example, in a case where wireless terminal 700 transmits a prescribed signal to intercom master device 500 only during a period of time for which wireless terminal 700 is located inside of building 200, intercom master device 500 may make the determination based on whether or not the signal is received. Furthermore, in a case where it is possible that intercom master device 500 performs direct communication with wireless terminal 700 using short-distance wireless communication, the determination may be made based on whether or not wireless terminal 700 is located in an area where the communication with intercom master device 500 is possible, or based on radio field intensity or the like.

Furthermore, the communication terminal that receives the terminal-destined visiting notification from entrance slave device 400 and performs the information output, and that transmits the terminal's unlocking instruction to intercom master device 500 when the unlocking instruction operation is performed is not limited to the example described above. The communication terminal, for example, may be a tablet type information terminal or a notebook personal computer.

Furthermore, the device that imposes a limitation on the unlocking that depends on whether or not the visiting notification is received is assumed to be intercom master device 500 according to the embodiment, which is described above, but is limited to this. For example, in authentication server 600, wireless communication router 610, or wireless terminal 700, it may be determined whether or not wireless terminal 700 is located indoors, and the terminal's unlocking instruction may be transmitted or transferred to intercom master device 500 under the condition that wireless terminal 700 is located indoors. Even in these cases, as a result, intercom master device 500 performs the operation of unlocking electronic lock 300 under the condition that wireless terminal 700 is located indoors.

Furthermore, one portion of the constitution of each device, which is described above, may be physically separated from another portion of the constitution of the device. In this case, in these constitutions, there is a need to individually include a communicator for performing the communication with each other. Furthermore, multiple devices may be constituted into one piece, such as when electronic lock 300 and entrance slave device 400 are combined into one device.

### Wrap-up of the Embodiment

An intercom system according to the present disclosure is an intercom system that includes an electronic lock that is provided in an entrance door of a building; an entrance slave device that is installed in the vicinity of the entrance door; an intercom master device that is installed inside of the building; and a communication terminal that it is possible to carry outside of the building. In the intercom system, the entrance slave device transmits a visiting notification to the intercom master device when it is detected that a person has come to the entrance door, the intercom master device transmits a terminal-destined visiting notification to the communication terminal when receiving the visiting notification, the communication terminal outputs information indicating that the person has come to the entrance door when receiving the terminal-destined visiting notification and transmits a terminal's unlocking instruction to the intercom master device when an unlocking instruction operation is performed in the communication terminal, and the intercom master device determines whether or not the communication terminal is located inside of the building, and when receiving the terminal's unlocking instruction, unlocks the electronic lock under the condition that the communication terminal is located inside of the building.

In the intercom system, the intercom master device may receive the terminal's unlocking instruction and when the electronic lock is not unlocked, transmit an operation refusal notification to the communication terminal, and when receiving the operation refusal notification, the communication terminal may output information indicating an operational error.

Furthermore, in the intercom system, the communication terminal may acquire terminal location information relating to a location of the communication terminal and may transmit the acquired terminal location information to the intercom master device, and the intercom master device may receive the terminal location information and based on the received terminal location information, may determine whether or not the communication terminal is located inside of the building.

Furthermore, in the intercom system, when a locking instruction operation is performed in the communication terminal, the communication terminal may transmit a terminal's locking instruction to the intercom master device, and when receiving the terminal's locking instruction, the intercom master device may lock the electronic lock without depending on whether or not the communication terminal is located inside of the building.

An intercom master device according to the present disclosure is an intercom master device that is used in an intercom system which includes an electronic lock that is provided in an entrance door of a building; an entrance slave device that is installed in the vicinity of the entrance door; an intercom master device that is installed inside of the building; and a communication terminal that it is possible to carry outside of the building. The intercom master device includes a terminal notification unit that, when receiving from the entrance slave device a visiting notification indicating that a person has come to the entrance door, transmits a terminal-destined visiting notification to the communication terminal; a terminal location determiner that determines whether or not the communication terminal is located inside of the building; and an electronic lock controller that, when receiving from the communication terminal an terminal's unlocking instruction indicating that an unlocking instruction operation has been performed in the communication terminal, unlocks the electronic lock under the condition that the communication terminal is located inside of the building.

A communication method according to the present disclosure is a communication method in an intercom system that includes an electronic lock that is provided in an entrance door of a building; an entrance slave device that is installed in the vicinity of the entrance door; an intercom master device that is installed inside of the building; and a communication terminal that it is possible to carry outside of the building. The communication method has a step of causing the entrance slave device to transmit a visiting notification to the intercom master device when it is detected that a person has come to the entrance door, a step of causing the intercom master device to transmit a terminal-destined visiting notification to the communication terminal when receiving the visiting notification, a step of causing the communication terminal to output information indicating that the person has come to the entrance door when receiving the terminal-destined visiting notification, a step of causing the communication terminal to transmit a terminal's unlocking instruction to the intercom master device when an unlocking instruction operation is performed in the communication terminal, a step of causing the intercom master device to determine whether or not the communication terminal is located inside of the building, and a step of causing the intercom master device to unlock the electronic lock under the condition that the communication terminal is located inside of the building, when receiving the terminal's unlocking instruction from the communication terminal.

### Still Another Embodiment

### Operation of the System

Last, operation of intercom system 100 is described.

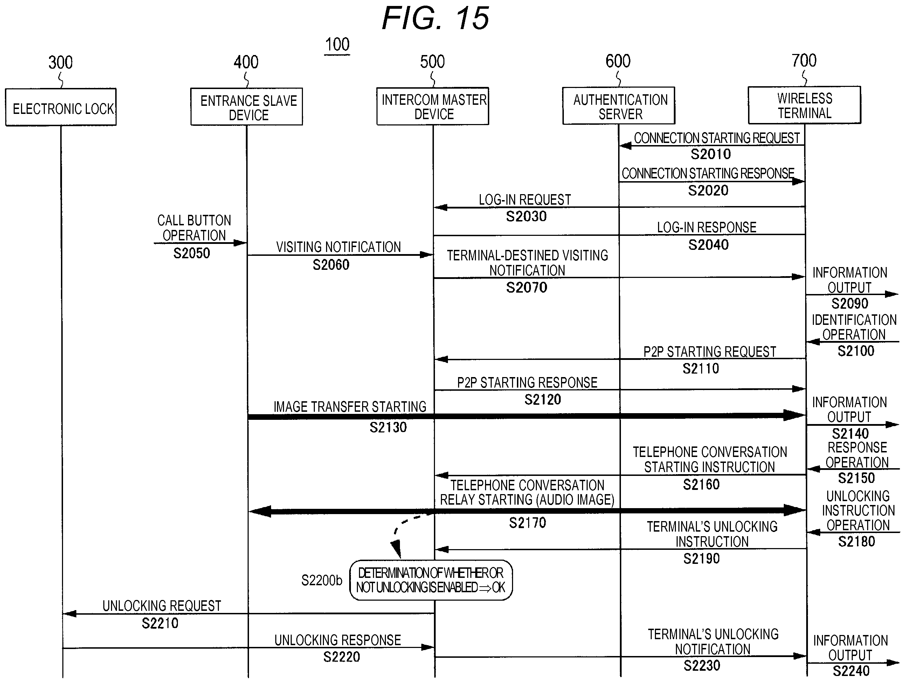

FIG. 15 is a sequence diagram illustrating an example of the operation of intercom system 100, and illustrates an example of a case where the unlocking operation is performed while a telephone conversation is carried out between entrance slave device 400 and wireless terminal 700 (while the telephone conservation is in progress).

In wireless terminal 700, when application software for checking the vicinity of the entrance and operating electronic lock 300 of entrance door 210, a connection starting request is transmitted from wireless terminal 700 to authentication server 600 (S2010). When authentication server 600 succeeds in authentication of wireless terminal 700, authentication server 600 replies with a connection starting response (S2020). Accordingly, a state where the relay of the communication by authentication server 600 is possible is attained.

Although not illustrated, intercom master device 500 makes a request to authentication server 600 for the same connection as well when powered on and so forth, and authentication server 600 performs the authentication on intercom master device 500 as well.

In addition, the log-in request is transmitted from wireless terminal 700 to intercom master device 500 (S2030), and when intercom master device 500 succeeds in the authentication of wireless terminal 700, intercom master device 500 replies with a log-in response indicating the success in authentication (S2040).

When in this state, the call button of entrance slave device 400 is operated (S2050), the visiting notification is transmitted to intercom master device 500 (S2060), and the terminal-destined visiting notification is transmitted from intercom master device 500 that receives the visiting notification is transmitted to wireless terminal 700 (S2070). These are notified, and transmission of an audio-accompanied image being acquired in entrance slave device 400 to intercom master device 500 is started as well. In wireless terminal 700 that receives the terminal-destined visiting notification, information indicating that visitor 230 is at entrance door 210 is output (S2090).

When the checking operation is performed by user 220 who receives an information output notifying the presence of a visitor (S2100), the P2P starting request is transmitted from wireless terminal 700 to intercom master device 500 (S2110). Intercom master device 500 replies with a P2P starting response (S2120), and transfer of audio and an image from entrance slave device 400 to wireless terminal 700 is started (S2130). As a result, in wireless terminal 700, an output, such as the image of the vicinity of the entrance, is started (S2140).

It is desirable that at this stage, intercom master device 500 does not output audio which occurs in the vicinity of the entrance. Audio data may be controlled in such a manner that in intercom master device 500, the audio data is not transferred to wireless terminal 700, and may be controlled in such a manner that in wireless terminal 700, the audio data is not audio-output.

According to this embodiment, a plan diagram illustrating an example of the display state of wireless terminal 700 when the terminal-destined visiting notification is received and the checking operation is performed is also the same as that in FIG. 7.

As illustrated in FIG, 7, image 811 that is captured in entrance slave device 400 and place icon 812 indicating entrance slave device 400 that is a transmission source of an image are displayed on touch panel-attached liquid crystal display 751 of wireless terminal 700. Furthermore, monitor icon 813 that is the terminal monitor button, telephone conversation icon 814 that is the terminal telephone conversation button, and electronic lock icon 815 that is a button that serves as both of terminal locking button and terminal unlocking button are displayed on touch panel-attached liquid crystal display 751.

When the information output is received and the response operation (clicking on telephone conversation icon 814) is performed by user 220 in wireless terminal 700 (S2150 in FIG. 15), the telephone conversation starting instruction is transmitted from wireless terminal 700 to intercom master device 500 (S2160). As a result, intercom master device 500 starts transfer of audio from wireless terminal 700 to entrance slave device 400 and relay of the telephone communication between wireless terminal 700 and entrance slave device 400 (S2170).

According to this embodiment, a plan diagram indicating an example of the display state of wireless terminal 700 when starting the telephone conversation with entrance slave device 400 is started is also the same as that in FIG. 8, and corresponds to FIG. 7.

As illustrated in FIG. 8, instead of monitor icon 813 and telephone conversation icon 814 in FIG. 7, telephone conversation ending icon 816 for performing an operation of ending a telephone conversation is displayed on touch panel-attached liquid crystal display 751 of wireless terminal 700.

When the unlocking instruction operation (clicking on electronic lock icon 815) is performed, by user 220 who identifies visitor 230, in wireless terminal 700 (S2180 in FIG. 15), the terminal's unlocking instruction is transmitted from wireless terminal 700 to intercom master device 500 (S2190). In order to prevent the unlocking instruction operation from being performed erroneously, when performing the unlocking instruction operation, wireless terminal 700 may display a pop screen for the double-checking of the operation by user 220.

According to this embodiment, a plan diagram indicating an example of the display state of wireless terminal 700 when the unlocking instruction operation is performed is also the same as that in FIG. 9, and corresponds to FIGs. 7 and 8.

As illustrated in FIG. 9, pop screen 817 for checking the unlocking instruction operation is displayed on touch panel-attached liquid crystal display 751 of wireless terminal 700. Operation notification unit 773 of wireless terminal 700 transmits the terminal's unlocking instruction to intercom master device 500 under the condition that an operation (clicking on an OK button) indicating that the unlocking is intended is performed on pop screen 817.

Because the telephone conversation is carried out between entrance slave device 400 and wireless terminal 700, the result of determining in intercom master device 500 whether or not the unlocking request is enabled is that the unlocking is approved (OK) (S2200b in FIG. 15), and the unlocking request is transmitted from intercom master device 500 to electronic lock 300 (S2210).

In electronic lock 300 that receives the unlocking request, the unlocking of entrance door 210 is performed, and the unlocking response indicating that the unlocking is completed is sent as a response to intercom master device 500 (S2220). The terminal-destined unlocking notification is transmitted from intercom master device 500 wireless terminal 700 (S2230), and information indicating that the unlocking operation succeeds is output from wireless terminal 700 (S2240).

According to this embodiment, a plan diagram indicating an example of the display state of wireless terminal 700 when the unlocking operation succeeds is also the same as that in FIG. 10, and corresponds to FIGs. 7 to 9.

As illustrated in FIG. 10, pop screen 818 indicating that the unlocking of electronic lock 300 succeeds is displayed on touch panel-attached liquid crystal display 751 of wireless terminal 700. Furthermore, the touch panel-attached liquid crystal display 751 changes electronic lock icon 815 in FIGs. 7 to 9 from an external appearance indicating that electronic lock 300 is locked to an external appearance indicating that electronic lock 300 is unlocked.

With this operation, intercom system 100 can unlock electronic lock 300 of entrance door 210, according to an operation in wireless terminal 700 of user 220, while the telephone conversation is carried out between entrance slave device 400 and wireless terminal 700.

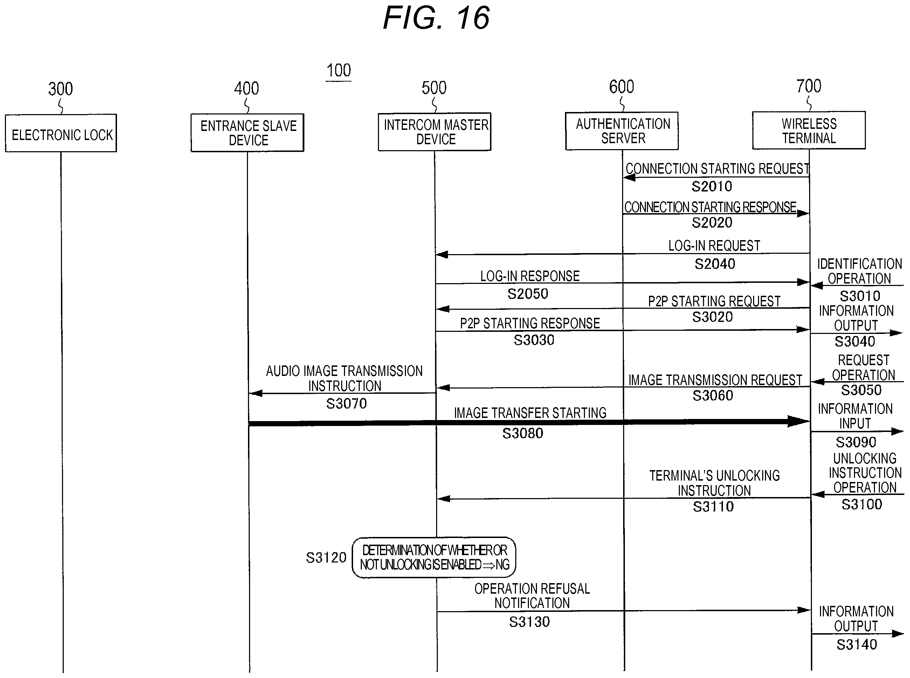

FIG. 16 is a sequence diagram illustrating an example of the operation of intercom system 100, and illustrates an example of a case where the unlocking operation is performed while a telephone conversation is not carried out between entrance slave device 400 and wireless terminal 700 (while the telephone conservation is not in progress). The same step number is given to the same portion as in FIG. 15, and a description thereof is omitted.

In order to remotely check the vicinity of the entrance of building 200, a prescribed checking operation (for example, clicking on place icon 812 indicating entrance slave device 400) is performed by a user of wireless terminal 700 (for example, user 220) in wireless terminal 700 (S3010). When this is done, the P2P starting request and the P2P starting response are exchanged (S3020 and S3030), and information indicating that the P2P communication with intercom master device 500 is established is output from wireless terminal 700 (S3040).

In addition, in wireless terminal 700, when a request operation (for example, clicking on monitor icon 813) of requesting the image of the vicinity of the entrance is performed (S3050), the image transmission request is transmitted from wireless terminal 700 to intercom master device 500 (S3060), and the audio image transmission instruction is transmitted from intercom master device 500 to entrance slave device 400 (S3070). As a result, the image of the vicinity of the entrance is transferred from entrance slave device 400 to wireless terminal 700 (S3080), and the image of the vicinity of the entrance is output from wireless terminal 700 (S3090).

When the unlocking instruction operation is performed by the user of wireless terminal 700 in wireless terminal 700 (S3100), the terminal's unlocking instruction is transmitted from wireless terminal 700 to intercom master device 500 (S3110). However, visitor 230 is not at entrance door 210, and the telephone conversation is not carried out between entrance slave device 400 and wireless terminal 700. For this reason, the result of determining in intercom master device 500 whether or not the unlocking is enabled is that the unlocking is not approved (NG) (S3120). The operation refusal notification is transmitted from intercom master device 500 to wireless terminal 700 (S3130), and information indicating that the unlocking fails (an operational error) is output from wireless terminal 700 (S3140).

According to this embodiment, a plan diagram indicating an example of the display state of wireless terminal 700 when the unlocking operation fails is also the same as that in FIG. 12, and corresponds to FIGs. 7 to 10.

As illustrated in FIG. 12, pop screen 819 indicating that the unlocking of electronic lock 300 fails is displayed on touch panel-attached liquid crystal display 751 of wireless terminal 700.

With this operation, intercom system 100 can prohibit the unlocking of electronic lock 300 of entrance door 210 that is based on the operation of wireless terminal 700, while the telephone conversation is not carried out between entrance slave device 400 and wireless terminal 700.

### Effects According to the Present Embodiment

As described above, intercom system 100 according to the present disclosure includes electronic lock 300 that is provided in entrance door 210 of building 200, entrance slave device 400 that is installed in the vicinity of entrance door 210, intercom master device 500 that is installed inside of building 200, and wireless terminal (communication terminal) 700 that it is possible to carry outside of building 200.

When it is detected that a person has come to entrance door 210, entrance slave device 400 transmits the visiting notification to intercom master device 500. When receiving the visiting notification, intercom master device 500 transmits the terminal-destined visiting notification to wireless terminal 700, and when receiving the telephone conversation starting instruction from wireless terminal 700, starts to relay the telephone conversation between entrance slave device 400 and wireless terminal 700. When receiving the terminal-destined visiting notification, wireless terminal 700 outputs the information indicating that a person has come to entrance door 210. When the response operation is performed in wireless terminal 700, wireless terminal 700 transmits the telephone conversation starting instruction to intercom master device 500, and when the unlocking instruction operation is performed in wireless terminal 700, transmits the terminal's unlocking instruction to intercom master device 500. When receiving the terminal's unlocking instruction, intercom master device 500 unlocks electronic lock 300 under the condition that the relay of the telephone conversation is started. That is, although the terminal's unlocking instruction is received, in a case where the relay of the telephone conversation is not started between entrance slave device 400 and wireless terminal 700, more precisely, in a case where a timing at which entrance door 210 does not have to be unlocked does not come, electronic lock controller 553 does not unlock entrance door 210.

Accordingly, intercom system 100 according to the present disclosure can prohibit the unlocking from being performed with the operation from wireless terminal 700 when the telephone conversation is not carried out between entrance slave device 400 and wireless terminal 700, while making it possible to unlock entrance door 210 with the operation from wireless terminal 700. Therefore, intercom system 100 can perform the operation of unlocking entrance door 210 from wireless terminal 700, in a state where a higher level of security is achieved compared with that in the related art.

### Modification Example of the Present Embodiment

A constitution of each device that makes it possible for the device to make a connection is not limited to the example described above. For example, wireless terminal 700 may perform directly the communication with intercom master device 500 or wireless communication router 610, using short- or middle-distance wireless communication, such as WiFi (a registered trademark) or Wireless Local Area Network (LAN).

Furthermore, the communication terminal that receives the terminal-destined visiting notification from entrance slave device 400 and performs the information output, and that transmits the terminal's unlocking instruction to intercom master device 500 when the unlocking instruction operation is performed is not limited to the example described above. The communication terminal may be a tablet type information terminal or a notebook personal computer, and may be a desktop type personal computer that is installed outside of building 200.

Furthermore, intercom master device 500 may determine whether or not a conversation over the telephone is carried out with audio interpretation, and may unlock electronic lock 300 under the condition that the conversation is carried out. Furthermore, for example, intercom master device 500 may determinate whether or not the elapsed time after the relay of the telephone conversation is started is a prescribed value or below without depending on whether the relay of the telephone conversation continues, and may unlock electronic lock 300 under the condition that the elapsed time is the prescribed value or below. Furthermore, electronic lock controller 553 may determine whether or not the unlocking is enabled, without depending on whether or not terminal notification unit 551 receive the visiting notification.

Furthermore, the device that imposes a limitation on the unlocking that depends on whether or not the delay of the telephone conversation is started is assumed to be intercom master device 500 according to the embodiment, which is described above, but is limited to this. For example, in authentication server 600, wireless communication router 610, or wireless terminal 700, it may be determined whether or not the relay of the telephone conversation is started, and the terminal's unlocking instruction may be transmitted or transferred to intercom master device 500 under the condition that the relay of the telephone conversation is started. Even in these cases, as a result, intercom master device 500 performs the operation of unlocking electronic lock 300 under the condition that the relay of the telephone conversation is started.

Furthermore, one portion of the constitution of each device, which is described above, may be physically separated from another portion of the constitution of the device. In this case, in these constitutions, there is a need to individually include a communicator for performing the communication with each other. Furthermore, multiple devices may be constituted into one piece, such as when electronic lock 300 and entrance slave device 400 are combined into one device.

### Wrap-up of the embodiment

An intercom system according to the present disclosure is an intercom system that includes an electronic lock that is provided in an entrance door of a building; an entrance slave device that is installed in the vicinity of the entrance door; an intercom master device that is installed inside of the building; and a communication terminal that it is possible to carry outside of the building or is installed outside of the building. In the intercom system, the entrance slave device transmits a visiting notification to the intercom master device when it is detected that a person has come to the entrance door, the intercom master device transmits a terminal-destined visiting notification to the communication terminal when receiving the visiting notification, and starts to relay telephone communication between the entrance slave device and the communication terminal when receiving a telephone conversation starting instruction from the communication terminal, the communication terminal outputs information indicating that the person has come to the entrance door when receiving the terminal-destined visiting notification, transmits the telephone conversation starting instruction to the intercom master device when an response operation is performed in the communication terminal, and transmits a terminal's unlocking instruction to the intercom master device when an unlocking instruction operation is performed in the communication terminal, and the intercom master device unlocks the electronic lock under the condition that the relay of the telephone communication is started, when receiving the terminal's unlocking instruction.

In the intercom system, the intercom master device may receive the terminal's unlocking instruction and when the electronic lock is not unlocked, transmit an operation refusal notification to the communication terminal, and when receiving the operation refusal notification, the communication terminal may output information indicating an operational error.

Furthermore, in the intercom system, the intercom master device may unlock the electronic lock under the condition that the terminal's unlocking instruction is received while the relay of the telephone communication is performed.

Furthermore, in the intercom system, the communication terminal may be a wireless terminal that it is possible to carry outside of the building.

An intercom master device according to the present disclosure is an intercom master device that is used in an intercom system which includes an electronic lock that is provided in an entrance door of a building, an entrance slave device that is installed in the vicinity of the entrance door, an intercom master device that is installed inside of the building, and a communication terminal that it is possible to carry outside of the building or is installed outside of the building. The intercom master device includes a terminal notification unit that transmits a terminal-destined visiting notification to the communication terminal when receiving from the entrance slave device a visiting notification indicating that a person has come to the entrance door, a telephone conversation relay unit that starts to relay communication between the entrance slave device and the communication terminal when receiving from the communication terminal a telephone conversation starting instruction indicating that a response operation is performed in the communication terminal, and an electronic lock controller that unlocks the electronic lock under the condition that the delay of the telephone conversation is started, when receiving from the communication terminal a terminal's unlocking instruction indicating that an unlocking instruction operation has been performed in the communication terminal.

A communication method according to the present disclosure is a communication method in an intercom system that includes an electronic lock that is provided in an entrance door of a building; an entrance slave device that is installed in the vicinity of the entrance door; an intercom master device that is installed inside of the building; and a communication terminal that it is possible to carry outside of the building or is installed outside of the building. The communication method has a step of causing the entrance slave device to transmit a visiting notification to the intercom master device when it is detected that a person has come to the entrance door, a step of causing the intercom master device to transmit a terminal-destined visiting notification to the communication terminal when receiving the visiting notification, a step of causing the communication terminal to output information indicating that the person has come to the entrance door when receiving the terminal-destined visiting notification, a step of causing the communication terminal to transmit a telephone conversation starting instruction to the intercom master device when a response operation is performed in the communication terminal, a step of causing the intercom master device to start to relay telephone conversation between the entrance slave device and the communication terminal when receiving the telephone conversation starting instruction, a step of causing the communication terminal to transmit a terminal's unlocking instruction to the intercom master device when an unlocking instruction operation is performed in the communication terminal, and a step of causing the intercom master device to unlock the electronic lock under the condition that the relay of the telephone conversation is started, when receiving the terminal's unlocking instruction from the communication terminal.

## Claims

1. An intercom system (100) that includes an electronic lock (300) that is provided in a door (210) of a building (200), a slave device (400) that is installed in the vicinity of the door (210), an intercom master device (500) that is installed inside of the building (200), and a communication terminal (700) that it is possible to carry outside of the building (200) or is installed outside of the building (200),
wherein the slave device (400) is adapted to transmit a visiting notification to the intercom master device (500) when it is detected that a person has come to the door (210),
wherein the intercom master device (500) is adapted to transmit a terminal-destined visiting notification to the communication terminal (700) when receiving the visiting notification,
wherein the communication terminal (700) is adapted to output information indicating that the person has come to the door (210) when receiving the terminal-destined visiting notification and is adapted to transmit a terminal's (700) unlocking instruction to the intercom master device (500) when an unlocking instruction operation is performed in the communication terminal (700), and
**characterized in that** the intercom master device (500) is adapted to unlock the electronic lock (300) under the condition that the visiting notification has been received, when receiving the terminal's (700) unlocking instruction,
wherein the intercom master device (500) is adapted to unlock the electronic lock (300) only under the condition that
a) the terminal's (700) unlocking instruction is received within a prescribed period of time that is determined with a point in time at which the visiting notification is received serving as a reference, or
b) it is determined, by a terminal location determiner of the intercom master device (500), that the communication terminal (700), that is possible to carry outside of the building (200), is located inside the building (200).

2. The system of Claim 1,
wherein the intercom master device (500) is adapted to receive the terminal's (700) unlocking instruction and when the electronic lock (300) is not unlocked, is adapted to transmit an operation refusal notification to the communication terminal (700), and
wherein, when receiving the operation refusal notification, the communication terminal (700) is adapted to output information indicating an operational error.

3. The system of claim 1,
wherein the communication terminal (700) is a wireless terminal (700) that it is possible to carry outside of the building (200).

4. An intercom master device (500) that is used in an intercom system (100) which includes an electronic lock (300) that is provided in a door (210) of a building (200), a slave device (400) that is installed in the vicinity of the door (210), an intercom master device (500) that is installed inside of the building (200), and a communication terminal (700) that it is possible to carry outside of the building (200) or is installed outside of the building (200), the intercom master device (500) comprising:
a terminal notification unit (551) that is adapted to transmit a terminal-destined visiting notification to the communication terminal (700) when receiving from the slave device (400) a visiting notification indicating that a person has come to the door (210); and
an electronic lock controller (553) that unlocks the electronic lock (300), when receiving from the communication terminal (700) a terminal's (700) unlocking instruction indicating that an unlocking instruction operation has been performed in the communication terminal (700)
**characterized in that** the electronic lock controller (553) is adapted to unlock the electronic lock (300) under the condition that the visiting notification has been received,,
wherein the electronic lock controller (553) is adapted to unlock the electronic lock (300) only under the condition that
a) the terminal's (700) unlocking instruction is received within a prescribed period of time that is determined with a point in time at which the visiting notification is received serving as a reference, or
b) it is determined, by a terminal location determiner of the intercom master device (500), that the communication terminal (700), that is possible to carry outside of the building (200), is located inside the building (200).

5. A communication method in an intercom system (100) that includes an electronic lock (300) that is provided in a door (210) of a building (200), a slave device (400) that is installed in the vicinity of the door (210), an intercom master device (500) that is installed inside of the building (200), and a communication terminal (700) that it is possible to carry outside of the building (200) or is installed outside of the building (200), the method comprising:
a step of causing the slave device (400) to transmit (S2060) a visiting notification to the intercom master device (500) when it is detected that a person has come to the door (210);
a step of causing the intercom master device (500) to transmit (S2070) a terminal-destined visiting notification to the communication terminal (700) when receiving the visiting notification;
a step of causing the communication terminal (700) to output (S2090) information indicating that the person has come to the door (210) when receiving the terminal-destined visiting notification; and
a step of causing the communication terminal (700) to transmit (S2190, S3110) a terminal's (700) unlocking instruction to the intercom master device (500) when an unlocking instruction operation (S2180, S3100) is performed in the communication terminal (700);
**characterized by** a step of causing the intercom master device (500) to unlock (S2210) the electronic lock (300) under the condition that the visiting notification has been received, when receiving the terminal's (700) unlocking instruction from the communication terminal (700),
wherein the step of causing the intercom master device (500) to unlock (S2210) the electronic lock (300) is provided only under the condition that
a) the terminal's (700) unlocking instruction is received within a prescribed period of time that is determined with a point in time at which the visiting notification is received serving as a reference, or
b) it is determined, in a terminal location determining step (S2191, S2192), that the communication terminal (700), that is possible to carry outside of the building (200), is located inside the building (200).

## Patentansprüche

1. Gegensprechsystem (100), das ein elektronisches Schloss (300), das in einer Tür (210) eines Gebäudes (200) vorgesehen ist, eine Slave-Vorrichtung (400), die in der Nähe der Tür (210) installiert ist, eine Gegensprech-Master-Vorrichtung (500), die innerhalb des Gebäudes (200) installiert ist, und ein Kommunikationsendgerät (700) aufweist, das außerhalb des Gebäudes (200) mitgeführt werden kann oder außerhalb des Gebäudes (200) installiert ist,
wobei die Slave-Vorrichtung (400) ausgestaltet ist, eine Besuchsbenachrichtigung an die Gegensprech-Master-Vorrichtung (500) zu übermitteln, wenn erfasst wird, dass eine Person zu der Tür (210) gekommen ist,
wobei die Gegensprech-Master-Vorrichtung (500) ausgestaltet ist, eine an das Endgerät gerichtete Besuchsbenachrichtigung an das Kommunikationsendgerät (700) zu übermitteln, wenn sie die Besuchsbenachrichtigung empfängt,
wobei das Kommunikationsendgerät (700) ausgestaltet ist, Information auszugeben, die angibt, dass die Person zu der Tür (210) gekommen ist, wenn es die an das Endgerät gerichtete Besuchsbenachrichtigung empfängt, und dazu ausgestaltet ist, eine Entriegelungsinstruktion des Endgeräts (700) an die Gegensprech-Master-Vorrichtung (500) zu übermitteln, wenn eine Entriegelungsinstruktionsbedienung an dem Kommunikationsendgerät (700) vorgenommen wird, und
**gekennzeichnet dadurch, dass** die Gegensprech-Master-Vorrichtung (500) ausgestaltet ist, das elektronische Schloss (300) unter der Bedingung zu entriegeln, dass die Besuchsbenachrichtigung empfangen wurde, wenn sie die Entriegelungsinstruktion des Endgeräts (700) empfängt,
wobei die Gegensprech-Master-Vorrichtung (500) ausgestaltet ist, das elektronische Schloss (300) lediglich unter der Bedingung zu entriegeln, dass
a) die Entriegelungsinstruktion des Endgeräts (700) innerhalb eines vorgeschriebenen Zeitabschnitts empfangen wird, der mit einem Zeitpunkt, zu dem die Besuchsbenachrichtigung empfangen wurde, als Referenz dienend bestimmt wird, oder
b) durch einen Endgerätspositionsbestimmer der Gegensprech-Master-Vorrichtung (500) bestimmt wird, dass sich das Kommunikationsendgerät (700), das außerhalb des Gebäudes (200) mitgeführt werden kann, innerhalb des Gebäudes (200) befindet.

2. System nach Anspruch 1,
wobei die Gegensprech-Master-Vorrichtung (500) ausgestaltet ist, die Entriegelungsinstruktion des Endgeräts (700) zu empfangen, und dazu ausgestaltet ist, eine Operationsverweigerungsbenachrichtigung an das Kommunikationsendgerät (700) zu übermitteln, wenn das elektronische Schloss (300) nicht entriegelt wird, und
wobei, wenn das Kommunikationsendgerät (700) die Operationsverweigerungsbenachrichtigung empfängt, das Kommunikationsendgerät (700) ausgestaltet ist, Information auszugeben, die einen Operationsfehler angibt.

3. System nach Anspruch 1,
wobei das Kommunikationsendgerät (700) ein drahtloses Endgerät (700) ist, das außerhalb des Gebäudes (200) mitgeführt werden kann.

4. Gegensprech-Master-Vorrichtung (500), die in einem Gegensprechsystem (100) verwendet wird, das ein elektronisches Schloss (300), das in einer Tür (210) eines Gebäudes (200) vorgesehen ist, eine Slave-Vorrichtung (400), die in der Nähe der Tür (210) installiert ist, eine Gegensprech-Master-Vorrichtung (500), die innerhalb des Gebäudes (200) installiert ist, und ein Kommunikationsendgerät (700) aufweist, das außerhalb des Gebäudes (200) mitgeführt werden kann oder außerhalb des Gebäudes (200) installiert ist, wobei die Gegensprech-Master-Vorrichtung (500) umfasst:
eine Endgerätsbenachrichtigungseinheit (551), die ausgestaltet ist, eine an das Endgerät gerichtete Besuchsbenachrichtigung an das Kommunikationsendgerät (700) zu übermitteln, wenn von der Slave-Vorrichtung (400) eine Besuchsbenachrichtigung empfangen wird, die angibt, dass eine Person zu der Tür (210) gekommen ist, und
eine Steuereinheit (553) für das elektronische Schloss, die das elektronische Schloss (300) entriegelt, wenn von dem Kommunikationsendgerät (700) eine Entriegelungsinstruktion des Endgeräts (700) empfangen wird, die angibt, dass eine Entriegelungsinstruktionsbedienung an dem Kommunikationsendgerät (700) durchgeführt wurde,
**gekennzeichnet dadurch, dass** die Steuereinheit (553) für das elektronische Schloss ausgestaltet ist, das elektronische Schloss (300) unter der Bedingung zu entriegeln, dass die Besuchsbenachrichtigung empfangen wurde,
wobei die Steuereinheit (553) für das elektronische Schloss ausgestaltet ist, das elektronische Schloss lediglich unter der Bedingung zu entriegeln, dass
a) die Entriegelungsinstruktion des Endgeräts (700) innerhalb eines vorgeschriebenen Zeitabschnitts empfangen wird, der mit einem Zeitpunkt, zu dem die Besuchsbenachrichtigung empfangen wurde, als Referenz dienend bestimmt wird, oder
b) durch einen Endgerätspositionsbestimmer der Gegensprech-Master-Vorrichtung (500) bestimmt wird, dass sich das Kommunikationsendgerät (700), das außerhalb des Gebäudes (200) mitgeführt werden kann, innerhalb des Gebäudes (200) befindet.

5. Kommunikationsverfahren in einem Gegensprechsystem (100) mit einem elektronischen Schloss (300), das in einer Tür (210) eines Gebäudes (200) vorgesehen ist, einer Slave-Vorrichtung (400), die in der Nähe der Tür (210) installiert ist, einer Gegensprech-Master-Vorrichtung (500), die innerhalb des Gebäudes (200) installiert ist und einem Kommunikationsendgerät (700), das außerhalb des Gebäudes (200) mitgeführt werden kann, oder außerhalb des Gebäudes (200) installiert ist, wobei das Verfahren umfasst:
einen Schritt des Veranlassens der Slave-Vorrichtung (400) zum Übermitteln (S2060) einer Besuchsbenachrichtigung an die Gegensprech-Master-Vorrichtung (500), wenn erfasst wird, dass eine Person zu der Tür (210) gekommen ist,
einen Schritt des Veranlassens der Gegensprech-Master-Vorrichtung (500) zum Übermitteln (S2070) einer an das Endgerät gerichteten Besuchsbenachrichtigung an das Kommunikationsendgerät (700), wenn die Besuchsbenachrichtigung empfangen wird,
einen Schritt des Veranlassens des Kommunikationsendgeräts (700) zum Ausgeben (S2090) von Information, die angibt, dass die Person zu der Tür (210) gekommen ist, wenn die an das Endgerät gerichtete Besuchsbenachrichtigung empfangen wird, und
einen Schritt des Veranlassens des Kommunikationsendgeräts (700) zum Übermitteln (S2190, S3110) einer Entriegelungsinstruktion des Endgeräts (700) an die Gegensprech-Master-Vorrichtung (500), wenn eine Entriegelungsinstruktionsbedienung (S2180, S3100) an dem Kommunikationsendgerät (700) vorgenommen wird,
**gekennzeichnet durch** einen Schritt des Veranlassens der Gegensprech-Master-Vorrichtung (500) zum Entriegeln (S2210) des elektronischen Schlosses (300) unter der Bedingung, dass die Besuchsbenachrichtigung empfangen wurde, wenn die Entriegelungsinstruktion des Endgeräts (700) von dem Kommunikationsendgerät (700) empfangen wird,
wobei der Schritt des Veranlassens der Gegensprech-Master-Vorrichtung (500) zum Entriegeln (S2210) des elektronischen Schlosses (300) lediglich unter der Bedingung vorgesehen ist, dass
a) die Entriegelungsinstruktion des Endgeräts (700) innerhalb eines vorgeschriebenen Zeitabschnitts empfangen wird, der mit einem Zeitpunkt, zu dem die Besuchsbenachrichtigung empfangen wurde, als Referenz dienend bestimmt wird, oder
b) in einem Endgerätepositionsbestimmungsschritt (S2191, S2192) bestimmt wird, dass sich das Kommunikationsendgerät (700), das außerhalb des Gebäudes (200) mitgeführt werden kann, innerhalb des Gebäudes (200) befindet.

## Revendications

1. Système d'interphone (100) qui comprend une serrure électronique (300) qui est prévue dans une porte (210) d'un bâtiment (200), un dispositif esclave (400) qui est installé à proximité de la porte (210), un dispositif maître d'interphone (500) qui est installé à l'intérieur du bâtiment (200), et un terminal de communication (700) que l'on peut avoir avec soi à l'extérieur du bâtiment (200) ou qui est installé à l'extérieur du bâtiment (200),
dans lequel le dispositif esclave (400) est adapté pour transmettre au dispositif maître d'interphone (500) une notification de visite lorsqu'il est détecté qu'une personne est venue à la porte (210),
dans lequel le dispositif maître d'interphone (500) est adapté pour transmettre au terminal de communication (700) une notification de visite destinée au terminal, lorsqu'il reçoit la notification de visite,
dans lequel le terminal de communication (700) est adapté pour délivrer de l'information indiquant que la personne est venue à la porte (210) lorsqu'il reçoit la notification de visite destinée au terminal, et est adapté pour transmettre au dispositif maître d'interphone (500) une instruction de déverrouillage du terminal (700) lorsqu'une opération d'instruction de déverrouillage est mise en oeuvre sur le terminal de communication (700), et
**caractérisé par le fait que** le dispositif maître d'interphone (500) est adapté pour déverrouiller la serrure électronique (300) à condition que la notification de visite ait été reçue, lorsqu'il reçoit l'instruction de déverrouillage du terminal (700),
dans lequel le dispositif maître d'interphone (500) est adapté pour déverrouiller la serrure électronique (300) uniquement à condition que
a) l'instruction de déverrouillage du terminal (700) soit reçue dans un délai prescrit qui est déterminé avec un moment auquel la notification de visite a été reçue, servant de référence, ou
b) il est déterminé par un déterminateur de position de terminal du dispositif maître d'interphone (500) que le terminal de communication (700) que l'on peut avoir avec soi à l'extérieur du bâtiment (200) se trouve à l'intérieur du bâtiment (200).

2. Système selon la revendication 1,
dans lequel le dispositif maître d'interphone (500) est adapté pour recevoir l'instruction de déverrouillage du terminal (700), et, lorsque la serrure électronique (300) n'est pas déverrouillée, il est adapté pour transmettre au terminal de communication (700) une notification de refus d'opération, et
dans lequel, lorsque le terminal de communication (700) reçoit la notification de refus d'opération, le terminal de communication (700) est adapté pour délivrer de l'information indiquant une erreur opérationnelle.

3. Système selon la revendication 1,
dans lequel le terminal de communication (700) est un terminal sans fil (700) que l'on peut avoir avec soi à l'extérieur du bâtiment (200).

4. Dispositif maître d'interphone (500) qui est utilisé dans un système d'interphone (100) qui comprend une serrure électronique (300) qui est prévue dans une porte (210) d'un bâtiment (200), un dispositif esclave (400) qui est installé à proximité de la porte (210), un dispositif maître d'interphone (500) qui est installé à l'intérieur du bâtiment (200), et un terminal de communication (700) que l'on peut avoir avec soi à l'extérieur du bâtiment (200) ou qui est installé à l'extérieur du bâtiment (200), le dispositif maître d'interphone (500) comprenant:
une unité de notification de terminal (551) qui est adaptée pour transmettre au terminal de communication (700) une notification de visite destinée au terminal, lorsqu'une notification de visite indiquant qu'une personne est venue à la porte (210) est reçue du dispositif esclave (400), et
une unité de commande de serrure électronique (553) qui déverrouille la serrure électronique (300) lorsqu'il est reçu du terminal de communication (700) une instruction de déverrouillage de terminal (700) indiquant qu'une opération d'instruction de déverrouillage a été mise en oeuvre sur le terminal de communication (700),
**caractérisé par le fait que** ladite unité de commande de serrure électronique (553) est adaptée pour déverrouiller la serrure électronique (300) à condition que la notification de visite ait été reçue,
dans lequel ladite unité de commande de serrure électronique (553) est adaptée pour déverrouiller la serrure électronique (300) seulement à condition que
a) l'instruction de déverrouillage du terminal (700) soit reçue dans un délai prescrit qui est déterminé avec un moment auquel la notification de visite a été reçue, servant de référence, ou
b) il est déterminé par un déterminateur de position de terminal du dispositif maître d'interphone (500) que le terminal de communication (700) que l'on peut avoir avec soi à l'extérieur du bâtiment (200) se trouve à l'intérieur du bâtiment (200).

5. Procédé de communication dans un système d'interphone (100) qui comprend une serrure électronique (300) qui est prévue dans une porte (210) d'un bâtiment (200), un dispositif esclave (400) qui est installé à proximité de la porte (210), un dispositif maître d'interphone (500) qui est installé à l'intérieur du bâtiment (200), et un terminal de communication (700) que l'on peut avoir avec soi à l'extérieur du bâtiment (200) ou qui est installé à l'extérieur du bâtiment (200), le procédé comprenant:
une étape consistant à amener ledit dispositif esclave (400) à transmettre (S2060) au dispositif maître d'interphone (500) une notification de visite lorsqu'il est détecté qu'une personne est venue à la porte (210),
une étape consistant à amener le dispositif maître d'interphone (500) à transmettre (S2070) au terminal de communication (700) une notification de visite destinée au terminal, lorsque la notification de visite est reçue,
une étape consistant à amener le terminal de communication (700) à délivrer (S2090) de l'information indiquant que la personne est venue à la porte (210), lorsque la notification de visite destinée au terminal est reçue, et
une étape consistant à amener le terminal de communication (700) à transmettre (S2190, S3110) au dispositif maître d'interphone (500) une instruction de déverrouillage du terminal (700) lorsqu'une opération d'instruction de déverrouillage (S2180, S3100) est mise en oeuvre sur le terminal de communication (700),
**caractérisé par** une étape consistant à amener le dispositif maître d'interphone (500) à déverrouiller (S2210) la serrure électronique (300) à condition que la notification de visite ait été reçue, lorsque l'instruction de déverrouillage du terminal (700) est reçue du terminal de communication (700),
dans lequel l'étape consistant à amener le dispositif maître d'interphone (500) à déverrouiller (S2210) la serrure électronique (300) est prévue uniquement à condition que
a) l'instruction de déverrouillage du terminal (700) soit reçue dans un délai prescrit qui est déterminé avec un moment auquel la notification de visite a été reçue, servant de référence, ou
b) il est déterminé, dans une étape de détermination de position de terminal (S2191, S2192), que le terminal de communication (700) que l'on peut avoir avec soi à l'extérieur du bâtiment (200) se trouve à l'intérieur du bâtiment (200).
